(19) **Europäisches Patentamt European Patent Office Office européen des brevets**

(11) **EP 4 557 096 A1**

(12) **EUROPEAN PATENT APPLICATION**

(43) Date of publication:
**21.05.2025 Bulletin 2025/21**

(21) Application number: **24209338.3**

(22) Date of filing: **29.10.2024**

(51) International Patent Classification (IPC):
**G06F 9/48** (2006.01)    **G06N 3/045** (2023.01)
**G06N 3/0464** (2023.01)

(52) Cooperative Patent Classification (CPC):
**G06F 9/4881; G06F 9/4887; G06N 3/045; G06N 3/0464**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.11.2023 GB 202317658**

(71) Applicant: **Nokia Technologies Oy**
**02610 Espoo (FI)**

(72) Inventors:
• **MIN, Chulhong**
  **Cambridge (GB)**
• **ACER, Utku Gunay**
  **Antwerp (BE)**
• **JANG, Si Young**
  **Cambridge (GB)**
• **LEE, Hyunjong**
  **Daejeon (KR)**

(74) Representative: **Nokia EPO representatives**
**Nokia Technologies Oy**
**Karakaari 7**
**02610 Espoo (FI)**

(54) **MACHINE LEARNING MODEL SCHEDULER**

(57)    Apparatus, comprising: means for obtaining a first machine learning model, the first machine learning model comprising at least a first layer; means for obtaining a second machine learning model, the second machine learning model comprising at least a second layer; means for determining an execution schedule for executing the first machine learning model and the second machine learning model, wherein the means for determining the execution schedule are configured to: vary a number of processing resources and a start time allocated to the first layer and the second layer. The apparatus further comprises means for executing the first machine learning model and the second machine learning model according to the execution schedule.

FIG. 6

## Description

### Field

Various example embodiments relate to an apparatus, method and/or computer program for allocation of processing resource, in particular for the execution of machine learning models.

### Background

Machine learning (ML) models are applied in various data-driven systems and applications to provide intelligent processing of ever-increasing amounts of data. In the era of the new generation of communication systems, the remarkable growth in data traffic and the continuous emergence of new applications of communications bring forward an inevitable need for more intelligent processing, operation, and optimization of computer processing to allow for efficient execution of machine learning models.

### Summary

According to a first aspect there is provided an apparatus, comprising: means for obtaining a first machine learning model, the first machine learning model comprising at least a first layer; means for obtaining a second machine learning model, the second machine learning model comprising at least a second layer; means for determining an execution schedule for executing the first machine learning model and the second machine learning model, wherein the means for determining the execution schedule are configured to: vary a number of processing resources and a start time allocated to the first layer and the second layer; and means for executing the first machine learning model and the second machine learning model according to the execution schedule.

In an example the first machine learning model comprises a third layer and the means for determining the execution schedule are further configured to vary the number of processing resources and the start time allocated to the third layer.

In an example the apparatus is configured to vary a number of processing resources and/or a start time allocated to the first layer and/or the second layer;

In an example the execution schedule comprises: a first start time defining when execution of the first layer begins; a second start time defining when execution of the second layer begins; and a resource allocation for the first layer and the second layer comprising at least one of: a first processing resource or a second processing resource.

In an example the resource allocation comprises a first resource allocation associated with the first layer and a second resource allocation associated with the second layer.

In an example the first resource allocation comprises at least one of: a first processing resource or a second processing resource.

In an example the second resource allocation comprises at least one of: a first processing resource or a second processing resource.

In an example the first resource allocation and the second resource allocation are different.

In an example the means for executing the first machine learning model and the second machine learning model according to the execution schedule is configured to execute the first machine learning model and the second machine learning model on the first processing resource and/or the second processing resource.

In an example executing the first machine learning model and the second machine learning model according to the execution schedule comprises: executing the first layer of the first machine learning model at the first start time on the first processing resource and the second processing resource; and executing the second layer of the second machine learning model at a second start time on the first processing resource.

In an example executing the second layer of the second machine learning model on the first processing resource comprises executing the second layer only on the first processing resource (i.e. not on the second processing resource). In an example the first start time is the same as the second start time. In an example the first start time is different to the second start time.

In an example the means for determining the execution schedule comprises means for: generating a first possible execution schedule for executing the first machine learning model and the second machine learning model; generating a second possible execution schedule for executing the first machine learning model and the second machine learning model; wherein the first possible execution schedule is different to the second possible execution schedule; and selecting the first possible execution schedule or the second possible execution schedule as the execution schedule.

In an example the first possible execution schedule has a different allocation of processing resources to the first layer and the second layer compared to the second possible execution schedule.

In an example the means for selecting the first possible execution schedule or the second possible execution schedule as the execution schedule comprise: means for determining a latency of the first possible execution schedule; means for determining a latency of the second possible execution schedule; and means for selecting the first possible execution schedule as the execution schedule in response to determining that the first possible execution schedule satisfies a criteria.

In an example the criteria comprises: minimizing a total execution time of the first and/or second machine learning model. In an example the criteria comprises: maximizing a total inference throughput of the first and/or second machine learning model. In an example the criteria comprises: assigning a same execution time to the first and second machine learning model. In an example the criteria comprises: satisfying a quality of service metric for the first and/or second machine learning model.

In an example the criteria is based on at least one of: minimising a total execution time of the first machine learning model and second machine learning model; or maximising a total inference throughput of the first machine learning model and second machine learning model.

In an example the first possible execution schedule satisfies the criteria if the total execution time of the first machine learning model and the second machine learning model in the first possible schedule is less than the total execution time of the first machine learning model and the second machine learning model in the second execution schedule.

In an example the first possible execution schedule satisfies the criteria if the total inference throughput of the first machine learning model and the second machine learning model in the first possible schedule is greater than the total inference throughput of the first machine learning model and the second machine learning model in the second execution schedule.

In an example the means for determining an execution schedule for executing the first machine learning model and the second machine learning model is configured to: allocate at least one processing resource at a first time to execute the first layer of the first machine learning model; determine if the second layer of the second machine learning model can be executed in parallel on at least one unallocated processing resource; and allocate the at least one unallocated processing resource at the first time to execute the second layer in response to determining that the second layer can be executed in parallel.

In an example the means for determining an execution schedule are further configured to: allocate the at least one processing resource processing resource to execute the second layer at a second time in response to determining that the second layer of the cannot be executed in parallel, wherein: the second time corresponds to a time when the first layer has completed execution on the at least one processing resource.

In an example the means for determining an execution schedule for executing the first machine learning model and the second machine learning model comprises means for: determining a latency to execute the first layer of the machine learning model on a first set of processing resources.

In an example the first set of processing resources comprises at least one of: the first processing resource or the second processing resource.

In an example the first set of processing resources comprise the first processing resource and the second processing resource.

In an example the first layer of the first machine learning model is associated with a type of operation performed by the first layer; and wherein the means for determining the latency to execute the first layer of the machine learning model on the first set of processing resources are configured to: determine a number of operations performed by the first layer on an input channel; and calculate the latency to execute the first layer based on: the number of operations performed by the first layer on the input channel; and a latency associated with the type of operation performed by the first layer.

In an example the type of operation performed by the first layer comprises a first convolutional operation using a first filter.

In an example the first layer of the first machine learning model is associated with a number of input channels to the first layer; and wherein the means for determining the latency are further configured to calculated the latency to execute the first layer based on: the number of input channels; a number of times different input channels are executed on a single processing resource in the first set of processing resources.

In an example the means for determining the latency to execute the first layer of the machine learning model on a first set of processing resources further are further configured to: determine the number of times different input channels are executed on the single processing resource based on: the number of input channels divided by a number of processing resources in the first set of processing resources.

In an example the first processing resource comprises at least one convolutional processing unit.

In an example a convolutional processing unit is a hardware component for accelerating convolutional operations.

In an example the first machine learning model is an artificial neural network. In an example the second machine learning model is an artificial neural network.

In an example the apparatus further comprises an artificial intelligence accelerator comprising the first processing resource and the second processing resource and wherein the means for executing the first machine learning model and the second machine learning model according to the execution schedule are configured to execute the first machine learning model and the second machine learning model on the artificial intelligence accelerator.

In an example the artificial intelligence accelerator is a hardware accelerator.

According to a second aspect there is provided an apparatus comprising: at least one processor; and at least one memory storing instructions that, when executed by the at least one processor, cause the apparatus at least to: obtain a first machine learning model, the first machine learning model comprising at least a first layer; obtain a second machine learning model, the second machine learning model comprising at least a second layer; determine an execution schedule for executing the first machine learning model and the second machine learning model, wherein determining the execution schedule comprises: varying a number of processing resources and a start time allocated to the first layer and the second layer; and execute the first machine learning model and the second machine learning model according to the execution schedule.

According to a third aspect there is provided a method comprising: obtaining a first machine learning model, the first machine learning model comprising at least a first layer; obtaining a second machine learning model, the second machine learning model comprising at least a second layer; determining an execution schedule for executing the first machine learning model and the second machine learning model, wherein determining the execution schedule comprises: varying a number of processing resources and a start time allocated to the first layer and the second layer; and executing the first machine learning model and the second machine learning model according to the execution schedule.

In an example the method is computer implemented.

In an example the execution schedule comprises: a first start time defining when execution of the first layer begins; a second start time defining when execution of the second layer begins; and a resource allocation for the first layer and the second layer comprising at least one of: a first processing resource or a second processing resource.

In an example executing the first machine learning model and the second machine learning model according to the execution schedule comprises: executing the first layer of the first machine learning model at the first start time on the first processing resource and the second processing resource; and executing the second layer of the second machine learning model at a second start time on the first processing resource.

In an example determining the execution schedule comprises: generating a first possible execution schedule for executing the first machine learning model and the second machine learning model; generating a second possible execution schedule for executing the first machine learning model and the second machine learning model; wherein the first possible execution schedule is different to the second possible execution schedule; and selecting the first possible execution schedule or the second possible execution schedule as the execution schedule.

In an example selecting the first possible execution schedule or the second possible execution schedule as the execution schedule comprises: determining a latency of the first possible execution schedule; determining a latency of the second possible execution schedule; and selecting the first possible execution schedule as the execution schedule in response to determining that the first possible execution schedule satisfies a criteria.

In an example the criteria is based on at least one of: minimising a total execution time of the first machine learning model and second machine learning model; or maximising a total inference throughput of the first machine learning model and second machine learning model.

In an example determining an execution schedule for executing the first machine learning model and the second machine learning comprises: allocating at least one processing resource at a first time to execute the first layer of the first machine learning model; determining if the second layer of the second machine learning model can be executed in parallel on at least one unallocated processing resource; and allocating the at least one unallocated processing resource at the first time to execute the second layer in response to determining that the second layer can be executed in parallel.

In an example determining an execution schedule further comprises: allocating the at least one processing resource processing resource to execute the second layer at a second time in response to determining that the second layer of the cannot be executed in parallel, wherein: the second time corresponds to a time when the first layer has completed execution on the at least one processing resource.

In an example determining an execution schedule for executing the first machine learning model and the second machine learning model comprises: determining a latency to execute the first layer of the machine learning model on a first set of processing resources.

In an example the first layer of the first machine learning model is associated with a type of operation performed by the first layer; and wherein determining the latency to execute the first layer of the machine learning model on the first set of processing resources comprises: determining a number of operations performed by the first layer on an input channel; and calculating the latency to execute the first layer based on: the number of operations performed by the first layer on the input channel; and a latency associated with the type of operation performed by the first layer.

In an example the type of operation performed by the first layer comprises a first convolutional operation using a first filter.

In an example the first layer of the first machine learning model is associated with a number of input channels to the first layer; and wherein determining the latency comprises calculating the latency to execute the first layer based on: the number of input channels; a number of times different input channels are executed on a single processing resource in the first set of processing resources.

In an example determining the latency to execute the first layer of the machine learning model on a first set of processing resources further comprises: determining the number of times different input channels are executed on the single processing resource based on: the number of input channels divided by a number of processing resources in the first set of processing resources.

In an example the first processing resource comprises at least one convolutional processing unit.

In an example the first machine learning model is an artificial neural network.

According to a fourth aspect there is provided a computer readable medium comprising instructions which, when executed by an apparatus, cause the apparatus to perform at least the following: obtaining a first machine learning model, the first machine learning model comprising at least a first layer; obtaining a second machine learning model, the second machine learning model comprising at least a second layer; determining an execution schedule for executing the first machine learning model and the second machine learning model, wherein determining the execution schedule comprises: varying a number of processing resources and a start time allocated to the first layer and the second layer; and executing the first machine learning model and the second machine learning model according to the execution schedule.

In an example the computer-readable medium is a non-transitory computer readable medium. In an example the instructions are program instructions. In an example the apparatus is a computer. In an example the apparatus comprises a processor that executes the instructions.

According to a fifth aspect there is provided a non-transitory computer readable medium comprising program instructions stored therein for performing at least the following: obtaining a first machine learning model, the first machine learning model comprising at least a first layer; obtaining a second machine learning model, the second machine learning model comprising at least a second layer; determining an execution schedule for executing the first machine learning model and the second machine learning model, wherein determining the execution schedule comprises: varying a number of processing resources and a start time allocated to the first layer and the second layer; and executing the first machine learning model and the second machine learning model according to the execution schedule.

**Brief Description of the Drawings**

Some example embodiments will now be described by way of non-limiting example, with reference to the accompanying drawings, in which:

FIG. 1A shows an Artificial Intelligence (AI) accelerator according to a first example;
FIG. 1B shows an Artificial Intelligence (AI) accelerator according to a second example;
FIG. 2 shows, by way of example, an architecture of a first convolutional neural network (CNN);
FIG. 3 shows, by way of example, an architecture of a second convolutional neural network (CNN);
FIG. 4 shows two examples of model allocation for running on an AI accelerator: sequential inference 402 and static allocation 404;
FIG. 5 shows a plurality of machine learning models according to an example
FIG. 6 shows a method 600 for executing a plurality of machine learning models according to an example;
FIG. 7. shows an example schedule (labelled dynamic model allocation 700) generated according to the method of FIG. 6;
FIG. 8. shows an example set of input channels;
FIG. 9A shows an illustrative example of the number of operations that are performed by a machine learning layer;
FIG. 9B shows an example timing diagram illustrating the convolutions performed by a machine learning layer on a convolutional processing unit;
FIG. 9C shows a mapping of input data channels to convolutional processing units according to an example;
FIG. 9D shows a part of a first possible schedule constructed using the brute force approach according to an example;
FIG. 9E shows a part of a second possible execution schedule constructed using the brute force approach according to an example;
FIG. 10 shows a first step of a greedy scheduling approach according to an example;
FIG. 11A shows a second part of the greedy scheduling approach according to an example;
FIG. 11B shows a third part of the greedy scheduling approach according to an example;
FIG. 12 shows a fourth part of the greedy scheduling approach according to an example;
FIG. 13 shows a fifth part of the greedy scheduling approach according to an example;
FIG. 14. shows a comparison of scheduling techniques according to a second example;
FIG. 15 shows, by way of example, a block diagram of an apparatus capable of performing the method(s) as disclosed herein.

In the figures same reference numerals denote same components/functionality.

**Detailed Description**

Deep learning is used in many application areas, such as computer vision, natural language processing, activity recognition and user interface. Deep learning algorithms can provide human-level accuracy for these applications, but are both computationally and memory intensive.

With increasing popularity of deep learning models and increasing complexity requirements of applications, new hardware architectures have emerged which are suitable for accelerating Deep Neural Network (DNN)-based workloads. Hardware architectures that are suitable for accelerating machine learning workloads are referred to herein as "AI accelerators". These dedicated accelerators typically contain large on-chip memory to reduce expensive off-chip memory accesses, large compute arrays for matrix multiplication and addition, dedicated data flow between computation cores for efficient data reuse and support low-precision computations. Initially, these AI accelerators were developed for and deployed in the cloud. However, in recent years, AI accelerators have been used mobile/embedded devices to take advantage of local computation for low latency, energy efficiency and privacy preservation. Examples of AI accelerators include, but are not limited to, the Apple™ A16 SoC, Nvidia™ Jetson, Intel™ Neural Computing Stick, Google™ Edge TPU. In an example, AI accelerators are implemented in the form of microcontroller (MCU) devices. Example AI controllers implemented in microcontroller devices include: the Maxim™ MAX78000, Arm™ Ethos and Greenwaves™ GAP-8. Such accelerators may have varying peak performance and power consumption.

These AI accelerators enable Deep Neural Network (DNN) inference even on microcontrollers. AI accelerators such as the Maxim™ MAX78000 provides the ability to perform convolutional operations (e.g. from one layer of the machine learning model) in parallel on the 64 convolutional processing units that are provided by the AI accelerator. However, since optimisation strategies are designed mostly for the execution of a single Deep Neural Network (DNN) model, these AI accelerators currently fail to serve multi-DNN workloads efficiently, thereby limiting the usage of these accelerators. As will be apparent from the description below, the apparatus and methods described herein enables and coordinate multi-DNN workloads on AI accelerators by dynamically controlling the allocation of processing resources to multiple layers from multiple DNN models.

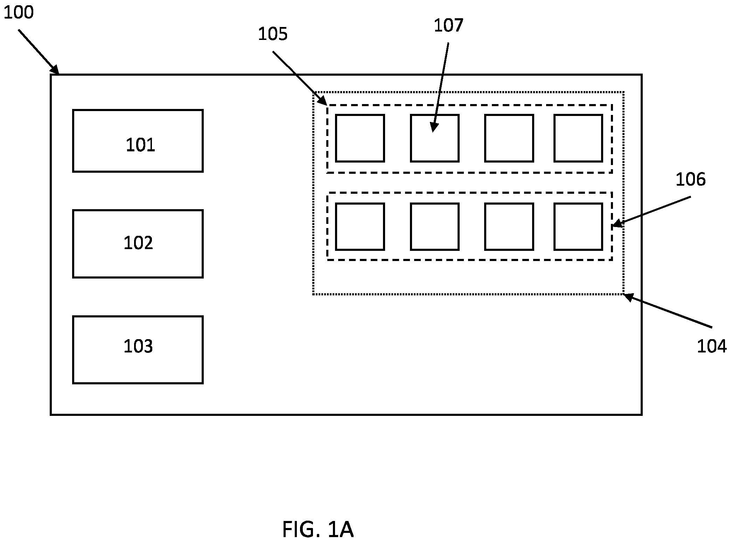

FIG. 1A shows an Artificial Intelligence (AI) accelerator according to a first example. In particular, FIG. 1A shows an AI accelerator 100 comprising at least one central processor 101, at least one memory 102, and an input/output module 103. The AI accelerator 100 also comprises a plurality of processing resources 104. The plurality of processing resources 104 comprises a first processing resource 105 and a second processing resource 106. Each of the first processing resource 105 and the second processing resource 106 comprise at least one convolutional processing unit 107.

In the AI accelerator 100, the at least one central processor 101 is communicatively coupled to the input/output module 103, the at least one memory 102 and the plurality of processing resources. The at least one central processor 101 is configured to execute computer program instructions stored in the at least one memory 103. In an example the at least one memory 103 is non-transient. In an example the at least one memory comprises persistent and non-persistent data storage means.

In an example, the AI accelerator 100 is configured to: receive a plurality of machine learning models, generate a schedule for executing the plurality of machine learning models using the plurality of processing resources 104 and execute at least part of the plurality of machine learning models on the plurality of processing resources 104 according to the generated schedule and based on input data. In a specific example the at least one central processor 101 of the AI accelerator 100 is configured to generate the schedule for executing the plurality of machine learning models. In an example, the input data is stored in the at least one memory 102. In an example the AI accelerator 100 is further configured to obtain an output from the plurality of machine learning models. In an example the at least one memory 103 stores instructions that when executed by the at least one processor 101 cause the processor to implement the above-described steps.

In an example, the AI accelerator 100 is configured to receive the plurality of machine learning models and communicate the output of the plurality of machine learning models via the input/output module 103.

In another example, the AI accelerator 100 is configured to: receive a plurality of machine learning models and a schedule for executing the plurality of machine learning models using the plurality of processing resources 104 and execute at least part of the plurality of machine learning models on the plurality of processing resources 104 according to the schedule based on the input data. In this case, the schedule is generated elsewhere (i.e. not on the AI accelerator 100). In one example the schedule is generated by an edge/cloud server communicatively coupled to the AI accelerator 100.

The plurality of processing resources 104 comprise hardware resources that can be used to perform computations. In an example, the AI accelerator 100 is used for the purpose of accelerating Convolutional Neural Networks (CNNs). In this case each processing resource in the plurality of processing resources 104 comprises at least one convolutional processing unit 107. The at least one convolutional processing unit 107 comprises means to perform a convolution (i.e. a summation of a dot product between an input data sample and a kernel). In an example the means to perform a convolution comprises circuitry configured to perform the convolution. In an example the at least one convolutional processing unit 107 also comprises a memory for storing data and/or weights required by the convolutional processing unit in order to perform a convolution.

During execution of the plurality of machine learning models the at least one central processor 101 is configured to perform convolutions using the plurality of processing resources 104 (e.g. by offloading convolution computations required by a layer of the machine learning model to the plurality of processing resource 104).

A processing resource (e.g. the first processing resource 105 and the second processing resource 106) represents the smallest unit of resource that can be allocated for executing a layer of a machine learning model when generating the schedule. Or put in other words, a processing resource represents a minimum number of convolutional processing units that can be assigned to a machine learning layer. The first processing resource 105 comprises at least one convolutional processing unit 107 and the second processing resource 106 comprises at least one convolutional processing unit 107. In some specific implementations the first processing resource 105 comprises a plurality of convolutional processing units. In one example the first processing resource 105 comprises 16 convolutional processing units.

Reference is now made to the Maxim™ MAX78000 by way of example only. Indeed, the approach to scheduling described herein is not limited to this specific product and may be conducted on any AI accelerator previously described or others known to those skilled in the art.

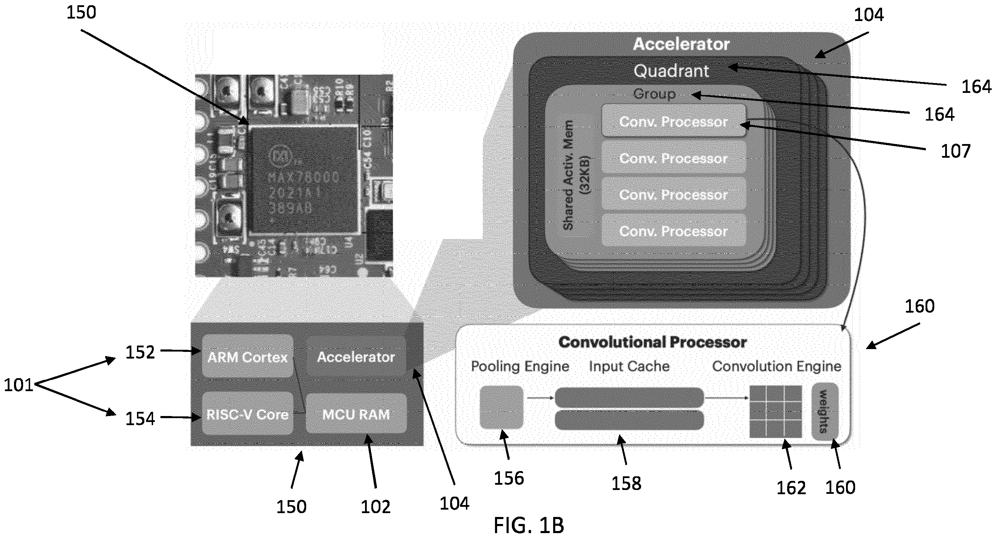

FIG. 1B shows an Artificial Intelligence (AI) accelerator according to a second example. In particular FIG. 1B shows a microcontroller-based AI accelerator 150 in the form of a Maxim™ MAX78000. The microcontroller-based AI accelerator 150 is a type of AI accelerator 100. The microcontroller-based AI accelerator 150 comprises at one central processor 101 comprising an Arm™ Cortex-M4 processor 152 with a Floating-Point Unit (FPU) running at up to 100 MHz and a 32-Bit RISC-V co-processor 154 running at up to 60MHz. The microcontroller-based AI accelerator 150 comprises at least one memory 102 comprising 512 KB of Flash and 128 KB of SRAM. The microcontroller-based AI accelerator 150 shown in Fig. 1B also comprises the plurality of processing resources 104 (Labelled "accelerator" in Fig. 1B). In the example implementation of Fig. 1B, the plurality of processing resources 104 comprises 64 convolutional processing units 107, weight storage memory of 442 KB, and data memory of 512 KB.

In the specific example of Fig. 1B, each convolutional processing unit 107 comprises a pooling engine 156, input cache 158, weight memory 160, and convolution engine 162 and is responsible for running a convolutional operation of a single channel. As shown in FIG. 1B, convolutional processing units are grouped into groups 164 by four, and the convolutional processing units in a group 164 share a shared activation memory for data input and activation data (8 bits for each processor in a 32-bit word). Four of these groups 164 are further grouped into a quadrant 166. A quadrant 166 has registers to program the execution configuration for each layer and allows developers to configure execution details including the processor selection, kernel address, input data address, output memory address. This sub-division in quadrants 166, groups 164 and convolutional processing units 107 allows control over which parts of the plurality of processing resources 104 are active to further reduce power consumption.

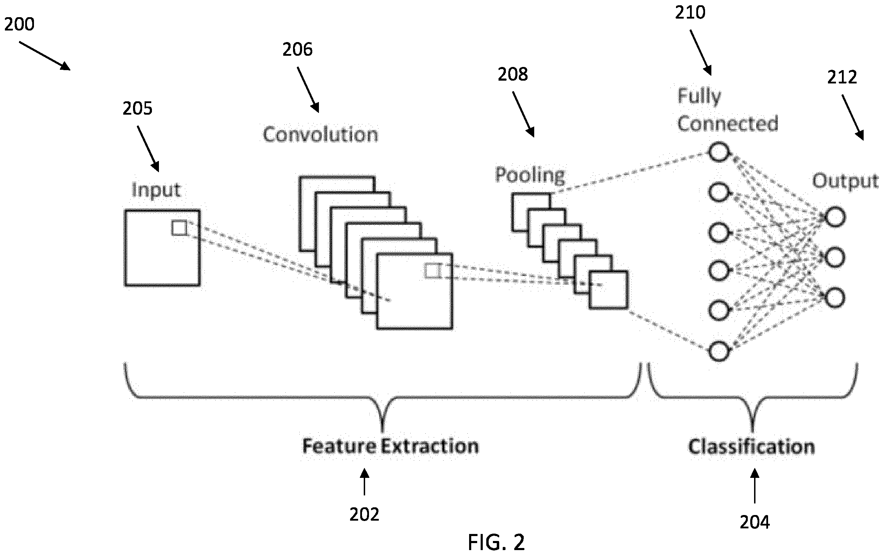

FIG. 2 shows, by way of example, an architecture of a first convolutional neural network (CNN). The CNN architecture 200 comprises two main parts: feature extraction 202 and classification 204, as shown in FIG. 2. Feature extraction 202 comprises at least one convolution operation. The at least one convolution operation separates and identifies the various features of an image for analysis during the classification process. The feature extraction 202 part of the CNN architecture 200 may take an input 205 and output feature maps by applying at least one convolutional layer 206 to the input 205. Optionally, in the feature extraction 202 part of the CNN architecture 200 at least one pooling layer 208 that is used to modify the feature maps generated by the at least one convolutional layer 206. The classification 204 part of the CNN architecture 200 comprises a fully connected layer 210 that utilizes the output from the feature extraction 202 part of the CNN architecture 200 and predicts the class of the image (output 212) based on the features extracted in previous stages.

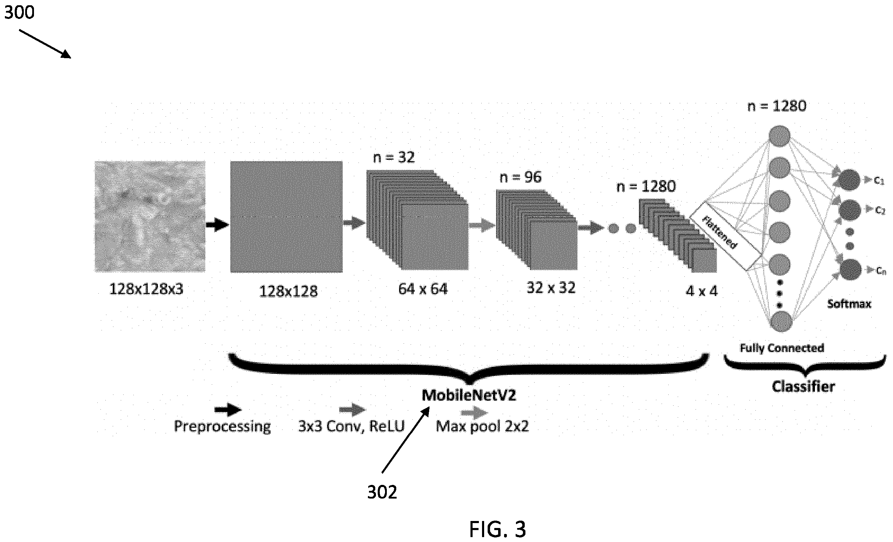

FIG. 3 shows, by way of example, an architecture of a second convolutional neural network (CNN). By way of example of a second CNN architecture 300 based on a MobileNetV2 302 is shown in FIG. 3, although other known feature extraction tools may be used. While the classification stage usually has one layer, it is common that the feature extraction stage has a series of convolutional layers to produce better abstraction from input data (e.g. image data). The amount of input each convolutional layer requires is different. The amount may be decreasing as the stage progresses as the main purpose of inference is to extract the high-level information (e.g., classification labels) from fuzzy, raw data.

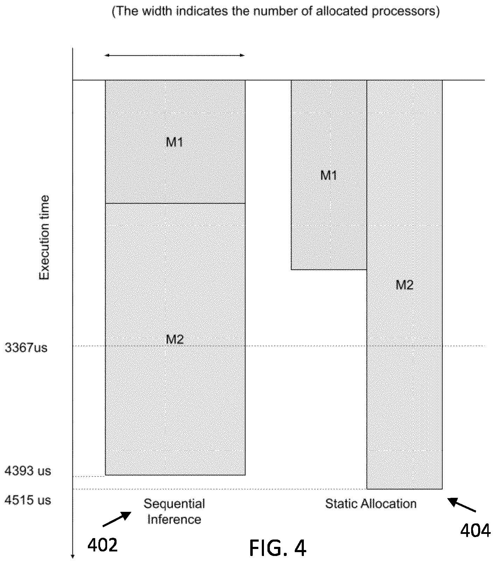

FIG. 4 shows two examples of model allocation for running on an AI accelerator: sequential inference 402 and static allocation 404. In both examples, two machine learning models (a first machine learning model, M1, and a second machine learning model, M2) are running on the AI accelerator and the execution schedule is shown. During sequential inference 402 multiple machine learning models are executed on the processing resources of the AI accelerator sequentially, i.e., one by one. During static allocation 404 the same number of processing resources are allocated to each machine learning model regardless of the model architecture. In such a solution, the latency of both M1 and M2 increases compared to the sequential inference case, as such there is no improvement in the overall execution time of both the model M1 and M2.

As will be apparent from the description below, the techniques described herein can allocate a different number of processing resources to concurrent layers from different machine learning models, i.e., allowing intense layers to utilize more processing resource and vice versa. Furthermore, by adjusting the start time of a layer execution and not simply the start time of the model itself, the AI accelerator is able to achieve higher inference speed as it optimizes execution in a more fine-grained level. The techniques described herein are referred to as: "dynamic allocation". The dynamic allocation approach may have a fine-grained schedule, to allow execution of M1 and M2 to be finished earlier than sequential inference 402 and static allocation 404 approach. This may lead to an improved system-wide inference throughput. This approach and the results of such an approach will be described in greater detail below.

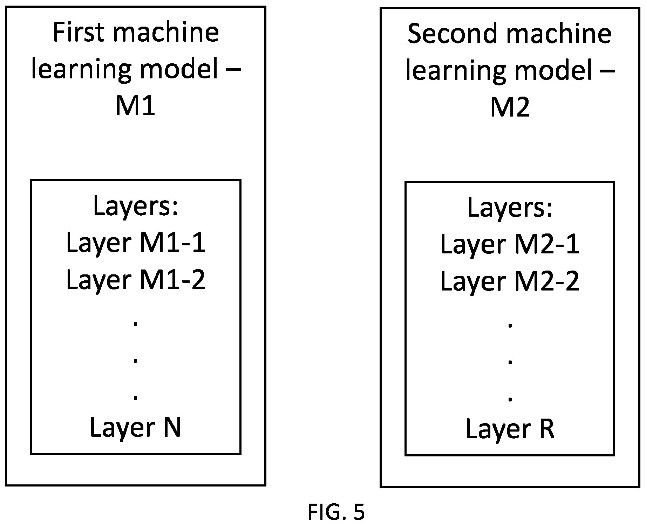

FIG. 5 shows a plurality of machine learning models according to an example. As shown in FIG. 5, there is provided a plurality of machine learning models 500. The plurality of machine learning models 500 comprising a first machine learning model, M1, and a second machine learning model, M2. The first machine learning model, M1, comprises a series of N layers to be executed sequentially (e.g. M1 layer 2 is to be executed after M1 layer 1). In an example N is greater than or equal to 1. Similarly, the second machine learning model, M2, has a series of R layers to be executed by a processor. In an example R is greater than or equal to 1. The layers of the first machine learning model, M1, and the second machine learning model, M2, may each comprise multiple convolutional operations. Such layers may perform the feature extraction 202 and classification 204 process as described in relation to FIG. 2 and FIG. 3. The number of layers N in the first machine learning model, M1, and the number of layers Q in the second machine learning model, M2, may be the same or different.

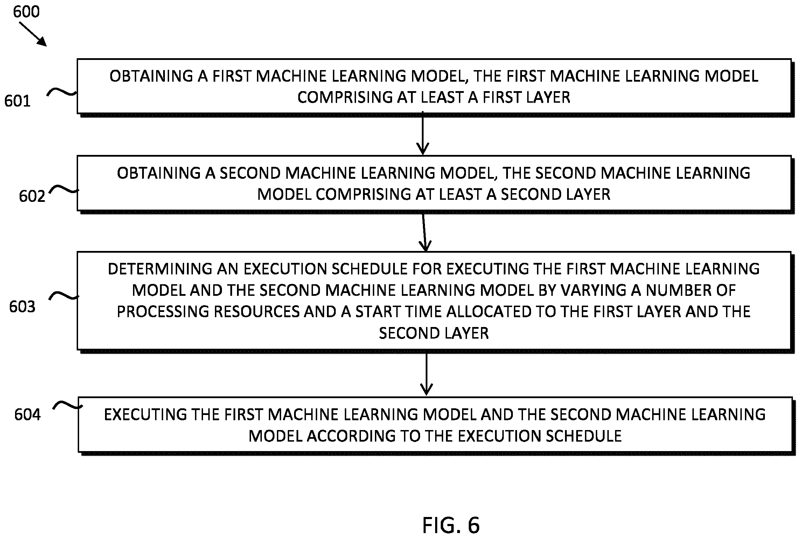

FIG. 6 shows a method 600 for executing a plurality of machine learning models according to an example. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations. The method may be performed by an apparatus such as the AI accelerator 100 of FIG. 1A. The apparatus may be an AI accelerator 100 configured to perform the method 600 steps.

The method 600 may comprise a first operation 601 of obtaining the first machine learning model, M1, having at least a first layer (e.g., layer M1-1 as shown in FIG. 5). In an example obtaining the first machine learning model, M1, comprises receiving the first machine learning model, M1, wherein the first machine learning model, M1, comprises a series of layers comprising multiple convolutional operations.

The method 600 may further comprise a second operation 602 of obtaining a second machine learning model M2 having at least a second layer (i.e. layer M2-1 as shown in FIG. 5). In an example obtaining the second machine learning model, M2, comprises receiving the second machine learning model, M2, wherein the second machine learning model, M2, comprises a series of layers comprising multiple convolutional operations.

The first layer of the first machine learning model, M1, may be associated with a type of operation to be performed by the first layer and a number of operations (of that type) to be performed by the first layer. In an example, the type of operation is a convolution operation using a first filter. In an example, a convolutional operation comprises obtaining a dot product of a filter and at least a part of the data input to the layer. For example, the first layer may be associated with 32 convolutions using a $3 \times 3$ filter. In this case, the type of operation is a convolutional operation using a $3 \times 3$ filter and the number of operations is 32. The second layer of the second machine learning model, M2, may also be associated with a type of operations to be performed by the second layer and a number of operations (of that type) to be performed by the second layer. In an example, the type of operation is a convolution operation using a second filter. For example, the second layer may be associated with 64 convolutions using a 1x1 filter. In this case, the type of operation is a convolution using a 1x1 filter and the number of operations is 64.

The method 600 may further comprise a third operation 603 of determining an execution schedule for executing the first machine learning model, M1, and the second machine learning model, M2. In an example, the execution schedule is determined by varying a number of processing resources and a start time allocated to the first layer and the second layer. As discussed above, the execution schedule is generated by varying the allocation of resources on a per-layer basis.

In an example the execution schedule comprises a start time and a resource allocation. The start time defines when the execution of each of the first layer (of the first machine learning model, M1) and second layer (of the second machine learning model, M2) will begin. The resource allocation indicates the processing resources that are to be used to execute the first layer (of the first machine learning model, M1) and the second layer (of the second machine learning model, M2).

In an example, the processing resources comprise the first processing resource 105 and the second processing resource 106. In an example, the first processing resource 105 comprises at least one convolutional processing unit 107 and the second processing resource 106 comprises at least one (different) convolutional processing unit 107. In an illustrative example, the first processing resource 105 comprises 16 convolutional processing units and the second processing resource 106 comprises 16 convolutional processing units.

In an example, during the third operation 603 a resource allocation for each of the first layer (of the first machine learning model, M1) and second layer (of the second machine learning model, M2) is determined. The processing resources in the execution schedule allocated to the first layer and the second layer include one or more of: the first processing resource and/or the second processing resource.

For example, in one instance of the schedule 16 convolutional processing units (e.g. the first processing resource) are allocated to execute the first layer of the first machine learning model. In another instance of the schedule 32 convolutional processing units (e.g. the first processing resource and the second processing resource) are allocated to execute the first layer.

The method 600 may further comprise a fourth operation 604 of executing the first machine learning model, M1, and the second machine learning model, M2, according to the execution schedule. In an example, the first machine learning model, M1, and the second machine learning model, M2, are executed on the first processing resource 105 and/or the second processing resource 106.

Executing the first machine learning model and the second machine learning model according to the execution schedule may include executing the first layer of the first machine learning model at a first start time on the first processing resource and/or the second processing resource and executing the second layer of the second machine learning model at a second start time on the first processing resource and/or the second processing resource.

The first layer and second layer may both be executed on the first processing resource 105. Alternatively, the first layer and the second layer may both be executed on the second resource 106. Alternatively, the first and second layer may be executed on different processing resources. As such, the first layer may be executed on one of the first or second processing resource and the second layer may be executed on the resource that the first layer was not executed on. In an example, the first layer is executed on both the first processing resource 105 and the second processing resource 106; and the second layer is executed on only one of the first processing resource 105 and the second processing resource 106.

In an example, the method of FIG. 6 is performed by the AI accelerator 100, optionally at least partly by the at least one processor 101 of the AI accelerator 100. In another example at least some of the steps of the method of FIG. 6 are performed on another apparatus. In one example, the step of determining the execution schedule (i.e. step 603) is performed on another apparatus (e.g. a different CPU or an edge server) and the determined schedule is communicated to the AI accelerator 100.

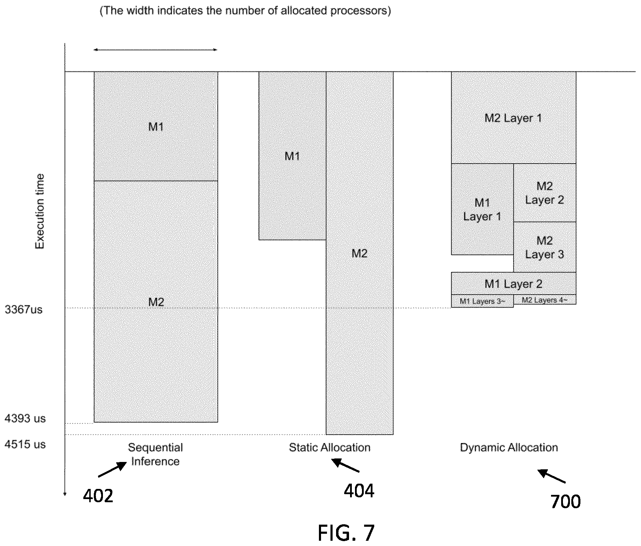

FIG. 7. Shows an example schedule (labelled dynamic model allocation 700) generated according to the method of FIG. 6. FIG. 7 shows the dynamic model allocation 700 alongside the sequential inference 402 and static allocation 404 scheduling approach as discussed in relation to FIG. 4. By using the scheduling approach described herein (also referred to as "dynamic model allocation"), it can be observed that the execution of the first machine learning model, M1, and the second machine learning model, M2 is completed earlier than sequential inference 402 and static allocation 404. This leads to a technical effect of faster processing of machine learning models and improved system-wide inference throughput.

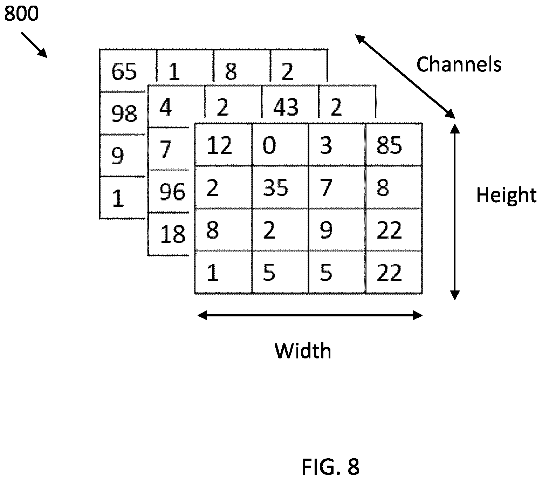

FIG. 8 Shows an example set of input channels. The input channels 800 of FIG. 8. Show an example of the image or intermediate data in a download pipeline. In particular the input channels may show an example snapshot in time of the input to a layer of the architecture described in relation to FIG. 2 or FIG.3. As known, a channel is a set of data values to which at least part of a kernel (filter) is applied.

In the following description there is provided two approaches to scheduling the plurality of machine learning models on the AI accelerator 100. These being the "brute force" approach and the "greedy" approach. For the avoidance of any doubt it is emphasized that other scheduling approaches could be used. In general any scheduling approach can be used to schedule the plurality of machine learning models provided that it: 1) schedules layers of the plurality of machine learning model independently (as opposed to complete machine learning models) and 2) varies (or at least has the ability to vary) the start time and the number of processing resources allocated to layers.

In the brute force scheduling approach various processing resource allocations for each layer are generated and a schedule is selected based on a criteria. For example, in the brute force scheduling approach a first possible schedule (also referred to as a first candidate schedule) is constructed with the first layer being allocated the first processing resource 105 for execution, a second possible schedule (also referred to as a second candidate schedule) is constructed with the first layer being allocated the first processing resource 105 and the second processing resource 106 for execution and so on. A schedule for execution is then selected based on which of the possible schedules meets the specified criteria.

One criteria for selecting a schedule is minimizing the total execution time of the plurality of machine learning models being scheduled. As shown in Fig. 7 ("Dynamic Allocation"), the time to execute the plurality of machine learning models is based on the sum of execution times for machine learning layers. For example, in Fig. 7 the execution time of the plurality of machine learning models (e.g. the first machine learning model, M1, and the second machine learning model, M2) is the sum of the execution times for: M2 Layer 1, M2 Layer 2, M2 Layer 3, M1 Layer 2, and M1 Layers 3~ (i.e. M1 Layer 3 to M1 Layer N, where N is the number of machine learning layers in the first machine learning model, M1).

To this end there is provided a partial latency estimation function that is used to estimate the latency (i.e. time) to execute a specific machine learning layer on a specified processing resource. By way of example, machine learning model M comprises N layers, and each layer is associated with a number of convolutional processing units, p, allocated for its execution. In this case a machine learning model *M* and a set of resources for execution of that model *P* can be formulated as:

$$M = \{L_1, L_2, \ldots, L_N\}, P = \{p_1, p_2, \ldots, p_N\},$$

Where:

$L_i$ is the ith layer of machine learning model *M*; and
$p_i$ is the number of convolutional processing units allocated to execute machine learning layer $L_i$.

In the description above, the terminology "processing resources" was introduced. As discussed above, a processing resource is the minimum number of convolutional processing units that can be allocated by the scheduling algorithm to a machine learning layer. It will be appreciated that it is possible to determine the number of convolution processing units allocated to a layer by multiplying the number of processing resources associated with a layer by the number of convolutional processing units in a processing resource.

In an example there is provided a partial latency estimation function that calculates the time taken to execute machine learning layer $L_i$ on the $p_i$ convolutional processing units.

In an example, the partial latency estimation function calculates the latency based on at least one of: the number of processing convolutional processing units $p_i$ assigned to execute machine learning layer $L_i$; or information indicative of the machine learning layer $L_i$ (e.g. at least one of: the type of operation being performed by layer $L_i$, the number of operations being performed by the layer $L_i$, or the number of input data channels).

In a specific example the latency for executing a layer $L_i$ on processing resources $p_i$ is calculated according to:

$$LEF\_layer(L_i, p_i) = LEF\_operation(L_i) \times num\_parallels(L_i, p_i) \times num\_operations(L_i)$$

Where:

$LEF\_layer(L_i, p_i)$ is the latency for executing a layer $L_i$ on convolutional processing units $p_i$;
$LEF\_operation(L_i)$ is the execution time for executing a single operation of the type of operation associated with layer $L_i$;
$num\_operations(L_i)$ is the number of operations that are performed by layer $L_i$ to process a single input channel on a single convolutional processing; and
$num\_parallels(L_i, p_i)$ is a maximum number of input channels allocated to a single convolutional processing unit.

As discussed above, $LEF\_operation(L_i)$ is the execution time for executing a single operation of the type of operation associated with layer $L_i$ on a convolutional processing unit. In an example, the execution time for the type of operation is predetermined. In an example the execution time for the type of operation is determined by one-time profiling of the AI accelerator 100 (e.g. by measuring the time taken for the AI accelerator 100 to perform the operation).

In an example the execution time for the type of operation is determined from a list (or table) indicating the execution times associated with one or more types of operation. An example of the list indicating execution times for different type of operation is as follows:

*TABLE 1*

| Operation | Time taken |
|---|---|
| 1×1 convolution | 0.01s |
| 2×2 convolution | ... |
| 3×3 convolution | ... |
| ... | ... |

In an example, the list of execution times associated with one or more types of operation is obtained from a manufacturer of the AI accelerator 100.

As discussed *above,* $num\_operations(L_i)$ is the number of operations that are performed by layer $L_i$. More specifically, $num\_operations(L_i)$ is the number of operations that are performed by layer $L_i$ on a single input data channel. In an example, the *num_operations*($L_i$) depends on the size of the input data and the type of operation. In an example, the size of the input data comprises the width and height of the input data. In an example the type of operation comprises information indicating at least one of: kernel size (e.g. kernel width, and kernel height), or stride.

In an example, the *num_operations*($L_i$) term is the number of operations that are performed by layer $L_i$ on a single input data channel and is calculated according to:

$$num\_operations(L_i) = \left\lceil \frac{L_{i_{width}} - L_{i_{kernel\_width}}}{L_{i_{stride}}} \right\rceil \times \left\lceil \frac{L_{i_{height}} - L_{i_{kernel\_height}}}{L_{i_{stride}}} \right\rceil$$

Where:

$L_{i_{width}}$ is the width of a single channel of input data to layer $L_i$;
$L_{i_{height}}$ is the height of a single channel of input data to layer $L_i$;
$L_{i_{kernel\_width}}$ is the width of the kernel (also referred to as filter) used by layer $L_i$;
$L_{i_{kernel\_height}}$ is the height of the kernel (also referred to as filter) used by layer $L_i$;
$L_{i_{stride}}$ is the stride of the filter applied by layer $L_i$;

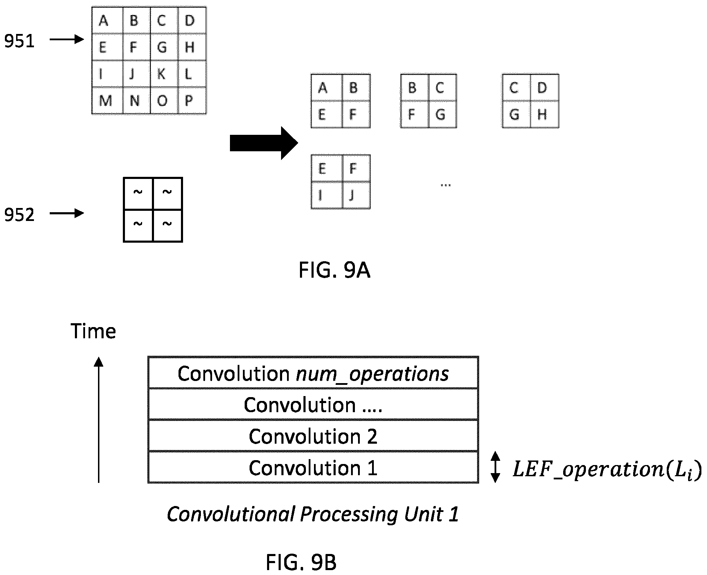

FIG. 9A shows an illustrative example of the number of operations that are performed by a machine learning layer. In the example of FIG. 9A a single channel of input data 951 has dimensions 4×4 (i.e. height = 4, width = 4). In the example of FIG. 9A the machine learning layer $L_i$ performs a convolutional operation with a kernel 952 of size 2×2 and a stride of 1 (i.e. kernel_height = 2, kernel_width= 2, stride = 1). In this example the number of operations performed by machine layer $L_i$ on a single channel of input data is 9. A sample of the input data for the operations (i.e. the convolutions) is shown in FIG. 9A.

Fig. 9B shows an example timing diagram illustrating the convolutions performed by a machine learning layer on a convolutional processing unit. In an example, the AI accelerator 100 is configured to allocate a single input data channel to a single convolutional processing unit. In this case all of the operations (i.e. *num_operations*($L_i$)) are executed sequentially (i.e. one after the other) on a single convolutional processing unit. In this case the time taken to convolve a single input data channel with a kernel is the number of operations (i.e. *num_operations*($L_i$)) multiplied by the latency to execute a single operation on a single processing resource (i.e. *LEF_operation*($L_i$)).

In some examples the input data to a machine learning layer comprises more than one input data channel. The time taken for a layer to complete execution is the time taken for the operation (i.e. convolution) to be applied to all of the input data channels. As discussed above, in some examples the AI accelerator 100 is configured to allocate a separate channel to each convolutional processing unit.

In some examples the number of input data channels is less than the number of convolutional processing units in the processing resources that are allocated to execute the layer. In this case some convolutional processing units remain idle for the duration while the other convolutional processing units perform the convolutions on each input data channel in parallel.

In some examples the number of input data channels is greater than the number convolutional processing units in the processing resources allocated to execute the layer.

In an example, when the number of convolutional processing units is less than the number of input data channels, the AI accelerator 100 is configured to execute input data channels sequentially (i.e. one after the other) on a same convolutional processing unit.

For example, the plurality of processing resources allocated to a machine learning layer may comprise 64 convolutional processing units and the input data to be processed by layer $L_i$ may comprise 80 input channels. In this case convolutional processing units 1 - 64 are allocated to input data channels 1 - 64 in a first time period and convolution processing units 1 - 16 are allocated to input data channels 65 - 80 in a second time period (after the convolutions have been performed for input data channels 1 - 64). To account for the time taken to execute multiple input channels on the same convolutional processing unit, there is included the term *num_parallels*($L_i$, $p_i$) in the partial latency estimation function.

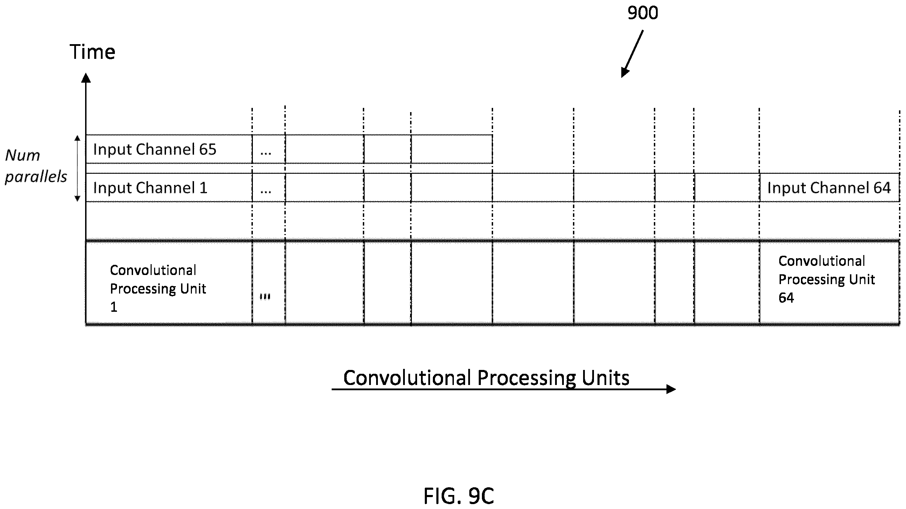

FIG. 9C shows a mapping of input data channels to convolutional processing units according to an example. In particular FIG. 9C shows an example where the number of input data channels to layer $L_i$ is greater than the number of convolutional processing units allocated to execute the layer. In an example, the AI accelerator 100 is configured to generate a mapping 900 where input data channels greater than the number of convolutional processing units are assigned to a same processor.

The term *num_parallels*($L_i$, $p_i$) indicates a (maximum) number of input channels allocated to a (single) convolutional processing unit. Or put in other words, *num_parallels*($L_i$, $p_i$) indicates a number of times the layer (i.e. the convolutional layer) is applied to different input data channels on a single convolutional processing unit.

In an example, the (maximum) number of input channels allocated to a (single) convolutional processing unit (i.e. *num_parallels(L_i, p_i)*) is determined by dividing the number of inputs channels to the machine learning layer, *L_i*, by the number of processors allocated to the machine learning layer, *p_i*, and rounding the result up to the nearest integer. In an example, the (maximum) number of input channels allocated to a (single) convolutional processing unit (i.e. *num_parallels(L_i, p_i)*) is calculated according to:

$$num\_parallels(L_i, p_i) \; = \; \lceil n\_input(L_i)/p_i \rceil$$

Where:

n_input(L_i) is the number of input data channels to the machine learning layer *L_i*; and
*p_i* is the number of convolutional processing units assigned to execute machine learning layer *L_i*.

As discussed above, by multiplying the execution time for executing a single operation (i.e. *LEF_operation(L_i)*) by the number of operations that are performed by layer *L_i* on a single input channel (*num_operations(L_i)*) and the number of input channels allocated to a single processing resource in the processors *p_i* (i.e. *num_parallels(L_i, p_i)*), it is possible to determine the latency (i.e. the time duration) taken to execute machine learning layer *L_i* on the number of convolutional processing units *p_i*.

As will be discussed in more detail below, this information (i.e., the latency to execute a machine learning layer on a specified number of convolutional processing units) can be used when determining a schedule for executing the plurality of machine learning models on the AI accelerator 100. Using the partial latency estimation function described above has an advantage that the estimated latency for different machine learning layers performing different operation types on different input data sizes etc. can be estimated quickly.

In the example above a specific partial latency estimation function is discussed (i.e. *LEF_layer(L_i, p_i)*). However for the avoidance of doubt it is emphasized that in other examples different ways to estimate the latency for a layer to be executed on a specified number of convolutional processing resources could be used. In a further example the partial latency estimation function includes a term to account for operations other than convolutions (e.g., pooling) that affect the processing of machine learning layer, *L_i*.

There is also provided an end-to-end latency estimation function for determining the end-to-end latency to successively (i.e. one after one) execute the *N* layers of the machine learning model *M* according to the set of resource *P* allocated to model. In an example, the end-to-end latency estimation is calculated based on the sum of the latencies for each of the layer in the machine learning model. In an example, the end-to-end latency is calculated according to:

$$LEF = \; \sum_{i=1}^{N} LEF\_layer(L_i, p_i),$$

Where:

*LEF* is the end-to-end latency estimation function for a machine learning model *M* having *N* layers; and
*LEF_layer(L_i, p_i)* is the latency to execute machine learning layer *L_i* using *p_i* processors. Optionally, implemented using the partial latency estimation function discussed above.

Provided above is a specific implementation of the end-to-end latency estimation function. However, it will be appreciated that in other examples different techniques can be used determine the end-to-end latency of a machine learning model *M*.

As discussed above, the techniques described herein schedule layers from a plurality of machine learning layers. During scheduling the start time and the number of processing resources allocated to each layer can be varied. Consequently, it is possible that layers from a single machine learning model are not executed successively (see Fig. 7 "Dynamic Allocation" for example). As will be discussed in more detail below, in these cases a different method to measure the end-to-end latency of the plurality of machine learning models is used.

Referring back to Fig. 6, in step 603 an execution schedule is determined for executing the first machine learning model and the second machine learning model. Two approaches to scheduling the plurality of machine learning models by varying the start time and processing resources allocated to layers of the machine learning models will now be discussed. Advantageously, scheduling machine learning models in this way (i.e. on a layer-by-layer basis with a variable start time and processing resource) enables a different number of processors to be allocated to each layer so as to improve system-wide performance (e.g., maximising the total inference throughput of multiple models).

The example scheduling algorithms will be explained in relation to an example where there are two machine learning models, M1 and M2 to be scheduled. However, for the avoidance of any doubt it is emphasized that the same techniques can be used to schedule more than two machine learning models.

In an example the first machine learning model, M1, comprises N layers and the second machine learning model, M2, comprises R layers. In this case, the first and second machine learning models, M1 and M2, can be formulated them as follows:

$$M_1 = \{L_1^1, L_2^1, \dots, L_N^1\}$$

$$M_2 = \{L_1^2, L_2^2, \dots, L_R^2\}$$

**'Brute force' approach**

In an example, the brute force approach searches all possible processing resource allocations for layers (from different models) and their execution priorities. All possible processing resource allocations are generated by selecting the number of quadrants for all layers from a minimum number of processing resources (e.g. 1) up to and including a maximum number of processing resource (e.g. 4 for the Maxim™ MAX78000 example).

The execution priorities of the machine learning models are used to select which model's layer to run ahead when there is a conflict in the processing resource allocations for two or more machine learning models. Possible execution priorities are the sequences of selections (either *M1* or *M2* indicating the selection of the model whose layer to execute).

In an example, brute scheduling comprises constructing a plurality of possible schedules (also referred to as: possible execution schedules), wherein in each possible schedule at least one layer from either of the first or second machine learning models is allocated to a different number of processing resources than in the other possible execution schedules. In an example the brute force approach to scheduling the first and second machine learning models comprises constructing a plurality of possible schedules, where each possible schedule comprises at least one unique layer-to-processing resource allocation.

In an example the "brute force" approach comprises constructing schedules comprising all possible combinations of layer-to-processing resource allocations. After determining possible execution schedules a metric (e.g. latency to execute the first and second machine learning models) for each possible schedule is calculated and a possible execution schedule is selected based on the metric.

In one example the brute force approach comprises: generating a first possible execution schedule, generating a second possible execution schedule wherein the second possible execution schedule is different to the first possible execution schedule, determining a latency of the first possible execution schedule, determining the latency of a second possible execution schedule, and selecting the first possible schedule for execution in response to determining that it meets a criteria. The criteria may be based on one or more of the following factors:

- minimizing a total execution time of the first and/or second machine learning model,
- maximizing a total inference throughput of the first and/or second machine learning model, where the total inference throughput is calculated based on the number of inferences generated by the first and/or second machine learning model in a given time (e.g. the total number of inferences generated per second).

- assigning a same execution time to the first and second machine learning model,
- satisfying, maximizing or minimizing a quality-of-service metric for the first and/or second machine learning model. Example quality-of-service metrics include but are not limited to: end-to-end latency of a machine learning model, inference throughput of a machine learning model or energy cost.

Two iterations of the schedule generation will be discussed in detail. In each iteration a different possible execution schedule is generated. The possible execution schedules are different because at least one layer out of the first machine learning model and the second machine learning model is allocated to a different number of processing resources in each schedule generation iteration.

For the purpose of explaining the brute force scheduling approach, an allocation of processing resource to a layer of a machine learning model (otherwise referred to as: a layer-to-processing resource allocation) is expressed as:

$$L(m, i) \rightarrow Q$$

Where:

L(m,i) represents the i$^{th}$ layer of the m$^{th}$ machine learning model; and
Q indicates the processing resource allocated for execution of L(m, i).

Here, L(m, i) -> Q means that layers L(m, i) (i.e., i^th layer of machine learning model m) is allocated to processor(s) Q.

For ease of explanation, in this example, the set of possible processing resources for allocation by the scheduler includes the first processing resource 105, q1, a second processing resource 106, q2, a third processing resource, q3, and a fourth processing resource, q4. For ease of explanation, only the scheduling of two machine learning layers (i.e. layer 1 of the first machine learning model and layer 1 of the second machine learning model) will be discussed in detail. However, for the avoidance of any doubt it is emphasized that these techniques could be used to schedule machine learning models with more than one layer.

In a first iteration of the brute force scheduling approach a first allocation of processing resources to machine learning layers is generated. An example first allocation includes:

$$L(M1,1) \rightarrow [q1, q2]$$

$$L(M2,1) \rightarrow [q2, q3]$$

In the first allocation layer 1 of the first machine learning model, M1, is allocated processing resources q1 and q2 and layer 1 of the second machine learning model, M2, is allocated processing resources q2 and q3.

In one specific implementation of the brute force approach, the layers from the multiple machine learning models are iteratively scheduled such that the first layers of all machine learning models are scheduled before scheduling the second layers of the plurality of machine learning models. In other example implementations this constraint is not used. In other examples the only constraint when generating schedules in the brute force approach is that later layers of the machine learning model are scheduled for execution after earlier layers (of the same machine learning model) have been executed (e.g. because the later layers need the outputs from the earlier layer). For example, a possible schedule generated according to the brute force approach could include M1 L2 being scheduled for execution before M2 L1, provided that M1 L1 is scheduled for execution before M1 L2.

In an example a priority is assigned to the machine learning models being scheduled. As will be apparent from the description below if, when constructing the possible schedules, two machine learning models have been allocated the same processing resource, then execution of the layer from the lower priority machine learning model will be deferred until after the layer from the higher priority machine learning model has been executed using that processing resource. In this example the first machine learning model, M1, has a higher priority than the second machine learning model, M2.

When constructing the possible schedules, a concept of scheduling timesteps is used. The duration of a timestep is the time taken for a layer of a machine learning model to be executed on the processing resource. Each timestep indicates a point in time when a processing resource is available to be use (since a layer has just completed execution on the processing resource). It will be appreciated that the duration of each scheduling timestep may be different.

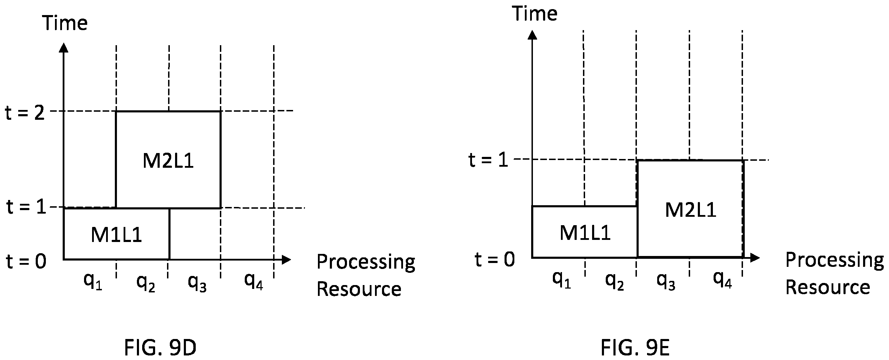

FIG. 9D shows a part of a first possible schedule constructed using the brute force approach according to an example. In particular, FIG. 9D shows a part of the first schedule where the layers have the example allocations discussed above. The process for constructing the first possible schedule based on the allocation will now be discussed.

Construction of the first possible schedule begins at a first scheduling timestep (e.g. t = 0) with the first layers of the machine learning models. The allocation for the layer from the highest priority machine learning model is added to the schedule. In this case, the allocation for the first layer of the first machine learning is added to the schedule (i.e. L(M1,1) -> [q1, q2] is added for scheduling timestep 0).

The allocation for the next highest priority machine learning model is then considered. In this example, the allocation for the second machine learning model is considered. If it is determined that there is no conflict in any of the allocated processing resources (i.e. the layer is not allocated a processing resource that is already used in the schedule) then the allocation is added to the schedule. If, on the other hand, there is a conflict in the allocated processing resource (i.e., the layer is allocated to a processing resource that is already used at that timestep in the schedule), then the scheduling timestep is incremented (e.g. to the second scheduling timestep, t = 1) and the layer is added to the schedule according to the allocated processing resources.

In the example discussed above both the first layer of the first machine learning model, M1 and the first layer of the second machine learning model, M2, are allocated to the second processing resource, q2. In this case there is a conflict since at least one processing resource has already been allocated in the same scheduling timestep (i.e. t = 0) to another machine learning model. Consequently, the first layer of the second machine learning model, M2, is added to the schedule using the allocated processing resources in the next scheduling timestep (e.g. the second timestep, t=1).

This process is repeated until layers of the same position (e.g. the first layer) for all of the machine learning models has been scheduled. The process is then repeated to schedule the next layer (e.g. the second layer) for all of the machine learning models.

In a second iteration of the brute force scheduling approach a second allocation of processing resources to machine learning layers is generated. An example second allocation includes:

L(M1,1) -> [q1, q2]

L(M2,1) -> [q3, q4]

Similarly, in this iteration, the first machine learning model, M1, is a higher priority than the second machine learning model M2. In accordance with the brute force approach discussed above, the first layer of the first machine learning model, M1 is added to the schedule at a first scheduling timestep (i.e. t = 0) to use the allocated processing resources.

The next highest priority machine learning model, M2, is then scheduled. In this example there is no conflict in the processing resource allocations (i.e. q3 and q4 allocated for L(M2, 1) are not already scheduled for use in the current scheduling timestep, t = 0). Consequently, the first layer of the second machine learning model, M2, is added to the schedule at the first scheduling timestep (i.e. t = 0) using the allocated processing resources.

FIG. 9E shows a part of a second possible execution schedule constructed using the brute force approach according to an example. As can be seen from FIG. 9E, since there is no conflict in the processing resource allocations for first layers of the first and second machine learning models, both are scheduled in the first scheduling timestep (i.e. t = 0) for execution in parallel.

After generating a plurality of possible execution schedules a metric is calculated to evaluate the possible execution schedules.

In an example the metric is an execution time of at least one machine learning model (e.g. the first machine learning model M1 or the second machine learning model M2). As can be seen from the example schedule in Fig. 7 (Dynamic Model Allocation 700), in some possible schedules the execution time of a machine learning model (e.g. the second machine learning model, M2) is greater than the sum of the latency of each specific layer. For example, in the dynamic model allocation 700 schedule, the execution time of the second machine learning model, M2, is the time taken to execute M2 Layer 1, M2 Layer 2, M2 Layer 3, M1 Layer 2, and M2 Layers 4~.

In an example, the time taken in a schedule to execute a machine learning model is calculated based on the time between starting execution of the first layer and finishing execution of the final layer. In an example, the time is calculated by summing the latency of layers that execute in a continuous sequence between starting execution of the first layer and finishing execution of the final layer. For example, M2 Layer 1, M2 Layer 2, M2 Layer 3, M1 Layer 2, and M2 Layer 4 execute continuously since there is no idle time in this part of the execution time. In contrast M2 Layer 1, M1 Layer 1, M1 Layer 2, M2 Layers 4~ do not execute continuously since there is idle time after executing M1 Layer 1 and before executing M1 Layer 2.

In an example, the execution time of the layers is calculated using the partial latency estimation function discussed above.

In an example the metric is the total execution time of a plurality of machine learning models. In this case the metric is calculated based on the longest time duration between starting execution of a first layer of a machine learning model in the plurality of machine learning models and finishing execution of a last layer of a machine learning model in the plurality of machine learning models. As discussed above, in one example this metric is calculated by summing the latency of layers that execute in a continuous sequence between the first layer and the last layer.

A schedule for execution is determined after obtaining a metric for each of the plurality of possible execution schedules. In an example, a schedule associated with a lowest metric value is selected from the plurality of possible execution schedules. For example, a metric with a lowest total execution time for a plurality of machine learning models or a lowest execution time for a single machine learning model is selected for execution.

In other examples, a schedule associated with a highest metric value is selected from the plurality of possible execution schedules. For example, where the metric is the throughput of one or more machine learning models, a schedule associated with the highest throughput metric is selected for deployment.

In the example above, the execution priorities of the first machine learning model and the second machine learning were the same for each iteration (and each allocation of layers to processing resources). In a further example the brute force scheduling approach comprises generating a plurality of allocations of layers to processing resources where each allocation has a unique combination of execution priorities and layer to processing resource mapping. For example, the allocation: L(M1,1) -> [q1, q2], L(M2,1) -> [q3, q4], priority order [M1, M2] is different to the allocation: L(M1,1) -> [q1, q2], L(M2,1) -> [q3, q4], priority order [M2, M1]. In this example the allocations are processed in the same way to generate possible execution schedules. In this example, the estimated latency for a plurality of possible allocation and execution priority pairs is calculated and a possible schedule is selected that satisfies a criterion.

In the examples above the priority is a per-model priority (e.g., priority order [M2, M1], where the second machine learning model, M2, has a higher priority than the first machine learning model, M1). In other examples the priority is a per-layer priority. In this case, the priority order indicates the priority of specific layers of the machine learning models relative to other layers. An example a per-layer priority order includes: [M1 L1, M1 L2, M1 L3, M2 L1, M1 L4, ...]. In this case, when generating a possible execution schedule the relative priorities of the specific layers are used to determine which layer should be scheduled first. In an example, the per-layer priority order includes a priority for each layer of the plurality of machine learning models being scheduled. In an example, where the first machine learning model comprises N layers and the second machine learning model comprises R layers, then the length of the per-layer priority is N + R.

A specific implementation of the 'brute force' scheduling technique can be expressed as the following pseudocode:

```
   SET allocations to list of all possible allocations
   SET priorities to list of all possible priorities
   SET latencies to empty List
   SET best_priorities to empty List


 // Find allocation and priority with smallest latency
  FOR each allocation in allocations
   SET latencies_of_allocation to empty List
   SET priorities_of_allocation to empty List


   // Find best priority for each allocations
   For each priorities in priorities
    PUSH calculate_latency (allocation, priority) to latencies_of_allocation
   PUSH Min(latencies_of_allocation) to latencies
   PUSH priorities[MinIdx(latencies_of_allocation)] to best_priorities


   SET idx to index of smallest element in latencies
  OUTPUT allocations[idx], best_priorities[idx]
```

## 'Greedy' approach

For the greedy approach, the algorithm selects the best effort at every scheduling timestep. Like in the previous approach, in the greedy approach the concept of scheduling timesteps is used when constructing the execution schedule. A scheduling timestep is a point in time when a processing resource becomes available for allocation to a machine learning layer (e.g. when a machine learning layer has finished execution using the processing resource or at the start of schedule construction). When there is no layer being executed, the algorithm runs a next layer from the machine learning model that has more input channels. When there is a layer that is already being executed, the algorithm checks if the layer from another model could fit (if the other model's layer requires less processing resources than currently are currently unoccupied). If so, it allocates the processing resource to the other model's layer, if not, it waits for the currently running layer to finish.

As such, the 'greedy approach' can be summarized as: determining if a first processing resource is available to be used to execute a machine learning layer at a first time, determining whether a machine learning layer is suitable for execution on the first processing resource, allocating the machine learning layer for execution on the first processing resource at the first time in response to determining that the first processing resource is available and the machine learning layer is suitable; determining whether a second machine learning layer can be executed with the remaining processing resources at the first time; and if so, allocating the second machine learning layer to at least part of the remaining processing resources; and if not allocating the second machine learning layer after the machine learning layer has finished execution. In the greedy approach the scheduling is re-evaluated/repeated after a machine learning layer finishes execution and processing resources become available.

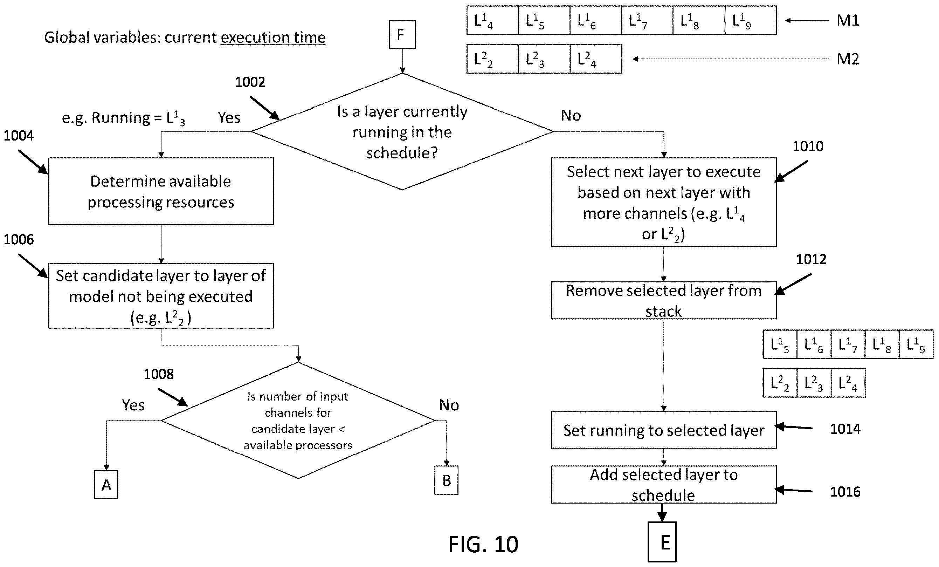

FIGS. 10 to 13 demonstrate a specific example of the 'greedy' scheduling method. Like letters between the figures represent a continuation of the steps in the method. As will be apparent from the description below, in the 'greedy' approach a schedule is constructed by determining whether to schedule (not yet executed) layers at successive scheduling timesteps. Consequently, in this approach the schedule is constructed step-by-step. This approach has the advantage of enabling a schedule that varies the number of processing resource and the start time of machine learning layers to be generated in a short time.

The greedy scheduling method can be used to generate an execution before it is used. For the purpose of constructing the schedule the method maintains a set of variables. One variable is the current execution time. In an example the current execution time is a simulated time (e.g. in the case where the greedy approach is used to generate the schedule *a priori*).

The example greedy scheduling method will be discussed in relation to an example where a third layer of a first machine learning model, $L^1_3$, is scheduled for execution at the current execution time. In this example the first machine learning model, M1, and the second machine learning model M2 are to be scheduled for execution. The fourth to ninth layers of first machine learning model (i.e. $L^1_4$ to $L^1_9$) and the second to fourth layers of the second machine learning model

(i.e. $L^2_2$ to $L^2_2$) have not yet been executed.

FIG. 10 shows a first step of a greedy scheduling approach according to an example. The method begins at step F in FIG. 10. The method proceeds to step 1002. In step 1002 a determination is made as to whether a layer from a machine learning model is already running/scheduled for execution in the schedule.

The method proceeds to step 1004 if it is determined 'Yes' in step 1002. At step 1004 the number of available processing resources is calculated. In an example the number of available processing resource comprises the processing resources currently not being used for execution of a machine learning model (i.e., not being used at the current execution time). The method proceeds to step 1006. In step 1006 a candidate layer (for inclusion in the schedule) is set to a next layer of a machine learning model not being executed in the schedule at the execution time. For example, in the example where the first machine learning model is currently executing in the schedule, step 1006 comprises setting the candidate layer to the next layer of the second machine learning model. The method proceeds to step 1008.

In step 1008 it is determined whether a number of input (data) channels associated with the candidate layer is greater than the number of convolutional processing units in the available processing resource. If it is determined that number of input channels for the candidate layer is greater than the number of available convolutional processing units, then the method proceeds to step A. If it is determined that number of input channels for the candidate layer is not greater than the number of convolutional processing units then the method proceeds to step B.

Returning to step 1002. If it is determined at step 1002 'No' (i.e. there is not a layer scheduled to be running at the current execution time) then the method proceeds to step 1010. At step 1010 a next layer to execute (i.e. add to the schedule for execution) is determined based on the next layer of the machine learning models that has more input data channels.

Each machine learning model is associated with a next layer to be executed unless the execution machine learning model has been completely scheduled. In the illustrative example shown alongside the method of FIG. 10, the next layer to be executed for the first machine learning model, M1, is $L^1_4$ and the next layer to be executed for the second machine learning model, M2, is $L^2_2$. After determining the next layer to be executed in step 1010, the method proceeds to step 1012.

At step 1012 the selected layer is removed from the stack of layers (yet) to be executed. The method proceeds to step 1014. At step 1014 the selected layer is added to set to have the status running. The method proceeds to step 1016. In step 1016 the selected layer is added to the execution schedule at the current execution time. For the amount of processing resources allocated to the selected layer, all possible cases (i.e., from 1 to the number of channel each layer contains) are considered. In an example the selected layer is allocated a number of processing resources that comprises: one convolutional processing unit for each input channel of the layer (in the case where there are more convolutional processing units available than the there are input channels) or a maximum number of convolutional processing units that can be scheduled (in the case where there are more input channels than convolutional processing units available for scheduling, so parallel/sequential execution is required).

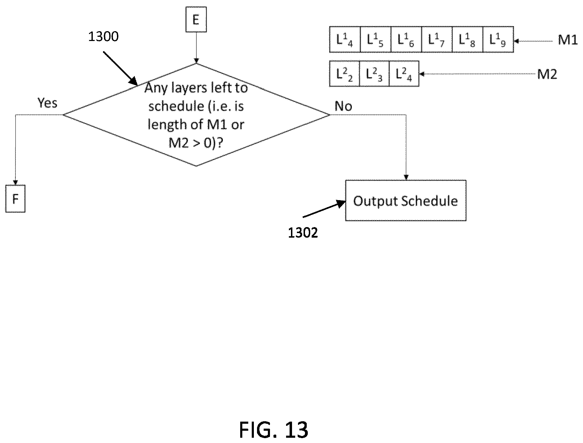

After step 1016 the method proceeds to step E. As will be discussed in more detail in relation to FIG. 13 below, step E comprises determining if there are any machine learning layers unscheduled (i.e. left to schedule) and if so, returning to step F of FIG. 10.

Returning to step 1008, in step 1008 a determination is made whether the number of input data channels for the candidate layer is less than the number of available processors. If the number of input data channels is less than the number of available processors the method proceeds to step A.

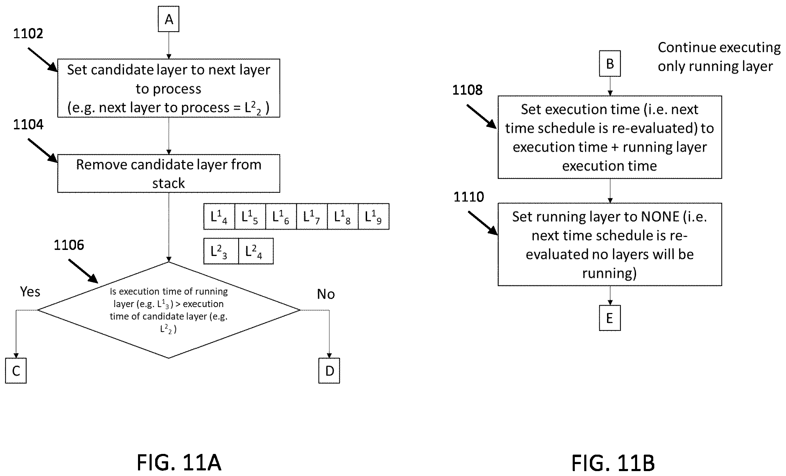

FIG. 11A shows a second part of the greedy scheduling approach according to an example. FIG.11A correspondingly follows from step A of the flowchart of FIG. 10. From step A the method proceeds to step 1102. At step 1102 the candidate layer is set as the next layer to process. The method proceeds to step 1104. At step 1104 the candidate layer is removed from the stack of machine learning layers (yet) to be executed. The method proceeds to step 1106.

At step 1106 it is determined whether the remaining time to execute the currently running layer (i.e. the difference between the current execution time and the time when the currently running layer finishes execution) is greater than the execution time of the candidate layer (e.g. $L^2_2$).

If it is determined that the remaining time (i.e. the time duration) to execute the currently running layer (e.g. $L^1_3$) is greater than the execution time of the candidate layer (e.g. $L^2_2$) then the method proceeds to step C. If it is determined that the remaining time to execute the currently running layer (e.g. $L^1_3$) is less than or equal to the execution time of the candidate layer (e.g. $L^2_2$) then the method proceeds to step D.

FIG. 11B shows a third part of the greedy scheduling approach according to an example. FIG.11B correspondingly follows from step B of the flowchart of FIG. 10. From step B the method proceeds to step 1108. At step 1108 the next time the schedule is to be evaluated (i.e. the next scheduling timestep) is set to the current execution time plus the time (i.e. the latency) required to execute the currently running layer (e.g. $L^1_3$). In an example the time for a machine learning layer to be executed is determined using the partial latency estimation function discussed above. The method proceeds to step 1110.

At step 1110 the running layer is subsequently set to 'NONE' (i.e. to indicate that at the next scheduling timestep there will be no layers executing) and then the method proceeds to step E.

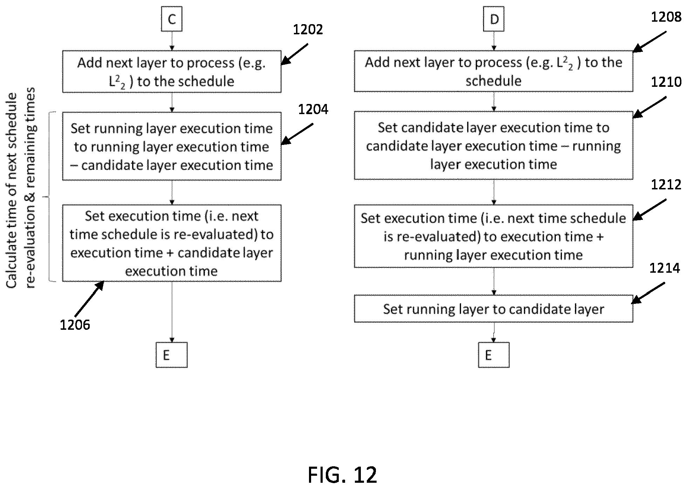

FIG. 12 shows a fourth part of the greedy scheduling approach according to an example. FIG. 12 correspondingly follows from steps C and D of the flowchart of FIG. 11A. As a reminder, in step 1106 it is determined whether remaining time to execute the running layer (e.g. $L^1_3$) is greater than the execution time of the candidate layer (e.g. $L^2_2$). If it is the method proceeds to step C. If it is not, the method proceeds to step D.

After step C the method proceeds to step 1202. At step 1202 the candidate layer is added to the execution schedule and the method proceeds to step 1204. In step 1204 the remaining execution time of the running layer at the next scheduling timestep is calculated. The method proceeds to step 1206. In step 1206 the execution time (i.e. the next to re-evaluate the schedule) is set.

In this case it has been determined that the layer currently running and the candidate layer can be executed concurrently (step 1008) and it has also been determined that the execution of the candidate layer will terminate/finish before the execution of the currently running layer (step 1106). As a result, there is an opportunity to use at least the processing resources allocated to the candidate layer when the candidate layer completes execution. With this in mind the next time to re-evaluate the schedule (e.g. to determine whether a layer of a machine learning model can be added to the schedule) is set in step 1206. The next time to re-evaluate the schedule is determined according to the current execution time plus the candidate layer execution time. At the next time the schedule is re-evaluated the running layer will still be executing on the processing resources. In step 1204 the remaining execution time of the running layer is determined by subtracting the candidate layer execution time (which is the next time the schedule will be re-evaluated) from the remaining running layer execution time. The remaining execution time of the running layer may be used in step 1106 of the next iteration. After completing steps 1204 and 1206, the method proceeds to step E.

If, in step 1106 of Fig. 11A it is determined that the execution time of the running layer is less than the execution time of the candidate layer then the method proceeds to step 1208. In step 1208 the next layer to process is added to the execution schedule and the method proceeds to step 1210.

In this case it has been determined that the execution of the running layer will terminate/finish before the next layer to process. As a result, there is an opportunity to use at least the processing resources allocated to the running layer when the running layer terminates/completes execution. When the running layer terminates/finishes execution the candidate layer will still be executed. In step 1210 the remaining execution time of the candidate layer is determined based on the total candidate layer execution time minus the remaining running layer execution time. This value indicates the processing time left for the candidate layer when the running layer finished execution. This value may be useful in step 1106 of a subsequent iteration.

After setting the candidate layer execution time in step 1210 the method proceeds to step 1212. In step 1212 the current execution time (i.e. the next time the schedule is re-evaluated) is set to the sum of the current execution time and the running layer execution time. After updating the current execution time the method proceeds to step 1214. In step 1214 the running layer is set to the candidate layer (since at the new execution time the previous running layer, e.g. $L^1_3$) will have finished executing. After step 1214 the method proceeds to step E.

FIG. 13 shows a fifth part of the greedy scheduling approach according to an example; FIG. 13 correspondingly follows from step E of FIG. 12. The method begins in step E and proceeds to step 1300. At step 1300 it is determined whether there are any layers left to be scheduled. If so, the method repeats by proceeding to step F as shown in FIG. 10. However, if no further layers are left to schedule the method terminates and an execution schedule is output at step 1302.

A specific implementation of the 'greedy' scheduling approach can be expressed as the following pseudocode:

```
    SET M1_Layers to layer infos of M1
    SET M2_Layers to layer infos of M2


    SET running to None
    SET execution_time to 0
    SET schedule to empty List


WHILE length(M1) > 0 or length(M2) > 0
  IF running is None
    SET next_layer_to_process to a layer with more channels between M1[0], M2[0]
    POP next_layer_to_process from next_layer_to_process.model // either
  M1_Layers or M2_Layers
    SET running to next_layer_to_process
    // Add num processors and timing to the allocation schedule
    PUSH (next_layer_to_process, next_layer_to_process.channels, execution_time)
  to schedule
  ELSE
    SET available_processors to 64 - running.channels
    SET candidate_layer to currently_not_running_model[0]
    IF candidate_layer.channels <= available_quadrants
      SET next_layer_to_process to candidate_layer
      POP candidate_layer from candidate_model
      IF running.execution_time > candidate_layer.execution time
       // finish running candidate_layer
       PUSH (next_layerto_process, next_layer to_process.channels,
  execution_time) to schedule
        SET running.execution_time to running.execution_time -
  candidate_layer.execution time
        SET execution_time to execution_time + candidate_layer.execution time
      ELSE
        // finish currently running layer
        PUSH (next_layerto_process, next_layer to_process.channels,
  execution_time) to schedule
        SET candidate_layer.execution_time to candidate_layer.execution time -
   running.execution_time
        SET execution_time to execution_time + running.execution_time
        SET running to candidate_layer
    ELSE
        SET execution_time to execution_time + running.execution_time
        SET running to None
  OUTPUT schedule
```

In the description above, two specific implementations of the scheduling technique are described. However, for the avoidance of doubt it is emphasized that other scheduling techniques could be used that schedule machine learning model execution by varying the amount of processing resources and the start time of layers of the machine learning model being scheduled.

**Evaluation**

The scheduling technique described herein (i.e. scheduling layer by layer with variable processing resources and start time) is compared to a sequential inference approach (where only the start time of a complete machine learning models is varied) and a static allocation approach (where only the amount of processing resources allocated to complete machine learning models is varied).

Case 1:

For example, case 1 model architecture may be formulated as follows:

| M1: |
| --- |
| Input: 32×32×32<br>Layer 1: 2D Convolution input channels 32, output channels 64, no pooling, kernel size 3×3, stride 1/1, pad 1/1<br>Layer 2: 2D Convolution input channels 64, output channels 32, 2×2 max pool with stride 2/2, kernel size 3×3, stride 1/1, pad 1/1 |

(continued)

| M1: |
| --- |
| Layer 3: 2D Convolution input channels 32, output channels 64, 2×2 max pool with stride 2/2, kernel size 3×3, stride 1/1, pad 1/1<br>Layer 4: 2D Convolution input channels 64, output channels 12, 2×2 avg pool with stride 2/2, kernel size 3×3, stride 1/1, pad 1/1<br>Layer 5: 2D Convolution input channels 12, output channels 10, no pooling, kernel size 1×1, stride 1/1, pad 0/0 |
| M2: |
| Input: 3×64×64 |
| Layer 1: 2D Convolution input channels 64, output channels 32, no pooling, kernel size 3×3, stride 1/1, pad 1/1<br>Layer 2: 2D Convolution input channels 32, output channels 64, 2×2 max pool with stride 2/2, kernel size 3×3, stride 1/1, pad 1/1<br>Layer 3: 2D Convolution input channels 64, output channels 32, 2×2 max pool with stride 2/2, kernel size 3×3, stride 1/1, pad 1/1<br>Layer 4: 2D Convolution input channels 32, output channels 64, 2×2 max pool with stride 2/2, kernel size 3×3, stride 1/1, pad 1/1<br>Layer 5: 2D Convolution input channels 64, output channels 32, 2×2 max pool with stride 2/2, kernel size 3×3, stride 1/1, pad 1/1<br>Layer 6: 2D Convolution input channels 32, output channels 16, no pooling, kernel size 3×3, stride 1/1, pad 1/1<br>Layer 7: 2D Convolution input channels 16, output channels 3, no pooling, kernel size 3×3, stride 1/1, pad 1/1 |

As shown in FIG.7. when the first machine learning model, M1, and the second machine learning model, M2, are scheduled by sequential inference 402 a time of 4393 us is taken to run two models in total. When the first and second machine learning models, M1 and M2, are assigned to the same number of processors according to the static allocation 404 approach it takes longer time (4515 us) due to the increase in the execution time of M2. When we adopt the dynamic allocation 700 approach as described herein, the execution time decreases to 3367 us, i.e., 23% decrease, compared to the sequential inference 402 approach.

Case 2:

For example, case 2 model architecture may be formulated as follows:

| M1: |
| --- |
| Input: 64×32×32<br>Layer 1: 2D Convolution input channels 64, output channels 64, no pooling, kernel size 3×3, stride 1/1, pad 1/1, ReLU<br>Layer 2: 2D Convolution input channels 64, output channels 32, no pooling, kernel size 3×3, stride 1/1, pad 1/1, ReLU<br>Layer 3: 2D Convolution input channels 32, output channels 64, no pooling, kernel size 3×3, stride 1/1, pad 1/1, ReLU |
| Layer 4: 2D Convolution input channels 64, output channels 32, no pooling, kernel size 3×3, stride 1/1, pad 1/1, ReLU<br>Layer 5: 2D Convolution input channels 32, output channels 32, max pool 2×2 with stride 2/2, conv2d with kernel size 3×3, stride 1/1, pad 1/1, ReLU<br>Layer 6: 2D Convolution input channels 32, output channels 20, no pooling, kernel size 3×3, stride 1/1, pad 1/1, ReLU<br>Layer 7: 2D Convolution input channels 20, output channels 44, no pooling, kernel size 3×3, stride 1/1, pad 1/1, ReLU<br>Layer 8: 2D Convolution input channels 44, output channels 48, max pool 2×2 with stride 2/2, kernel size 3×3, stride 1/1, pad 1/1, ReLU<br>Layer 9: 2D Convolution input channels 48, output channels 48, no pooling, kernel size 3×3, stride 1/1, pad 1/1, ReLU |

(continued)

| M1: |
| --- |
| Layer 10: 2D Convolution input channels 48, output channels 64, max pool 2×2 with stride 2/2, kernel size 3×3, stride 1/1, pad 1/1, ReLU<br><br>Layer 11: 2D Convolution input channels 64, output channels 64, max pool 2×2 with stride 2/2, kernel size 1×1, stride 1/1, pad 0/0, ReLU<br><br>Layer 12: 2D Convolution input channels 64, output channels 64, no pooling, kernel size 1×1, stride 1/1, pad 0/0, ReLU<br><br>Layer 13: 2D Convolution input channels 64, output channels 64, max pool 2×2 with stride 2/2, kernel size 3×3, stride 1/1, pad 1/1, ReLU<br><br>Layer 14: 2D Convolution input channels 64, output channels 100, no pooling, kernel size 1×1, stride 1/1, pad 0/0, no activation |
| M2: |
| Input: 32×64×64<br><br>Layer 1: 2D Convolution input channels 32, output channels 64, no pooling, kernel size 3×3, stride 1/1, pad 1/1<br><br>Layer 2: 2D Convolution input channels 64, output channels 32, 2×2 max pool with stride 2/2, kernel size 3×3, stride 1/1, pad 1/1<br><br>Layer 3: 2D Convolution input channels 32, output channels 64, 2×2 max pool with stride 2/2, kernel size 3×3, stride 1/1, pad 1/1<br><br>Layer 4: 2D Convolution input channels 64, output channels 32, 2×2 max pool with stride 2/2, kernel size 3×3, stride 1/1, pad 1/1<br><br>Layer 5: 2D Convolution input channels 32, output channels 32, 2×2 max pool with stride 2/2, kernel size 3×3, stride 1/1, pad 1/1<br><br>Layer 6: 2D Convolution input channels 32, output channels 16, no pooling, kernel size 3×3, stride 1/1, pad 1/1 |
| Layer 7: 2D Convolution input channels 16, output channels 3, no pooling, kernel size 3×3, stride 1/1, pad 1/1 |

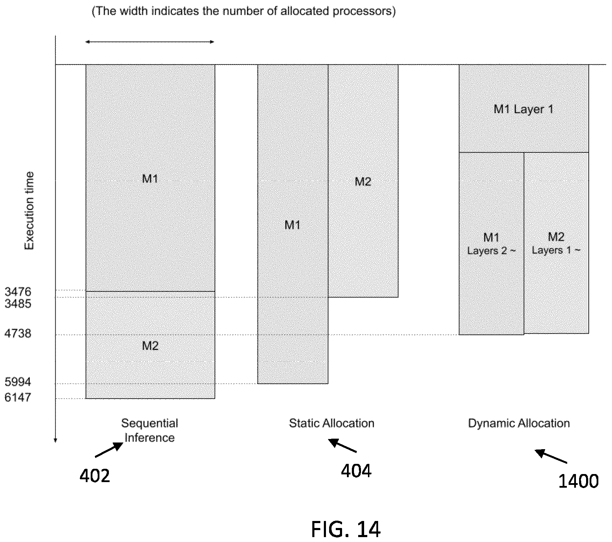

FIG. 14. shows a comparison of scheduling techniques according to a second example. In particular, FIG. 14 shows a comparison of scheduling techniques for scheduling the first machine learning model, M1, and the second machine learning model, M2, where those models have the structure described above (Case 2). Similarly, the results show that a schedule 1400 generated using the dynamic allocation approach described herein can decrease the total execution time significantly, 23% decrease, i.e., 6147 (for sequential inference 402) to 4738.

It is also important to note that, as shown FIG. 7 and FIG. 14, the solution disclosed herein minimises the idle time of convolution processors while decreasing the total execution time. As a result, even when the input is the data stream, the proposed solution can also increase the inference throughput (i.e., the total number of inferences generated per second) on a similar level to the reduction in the total execution time/latency.

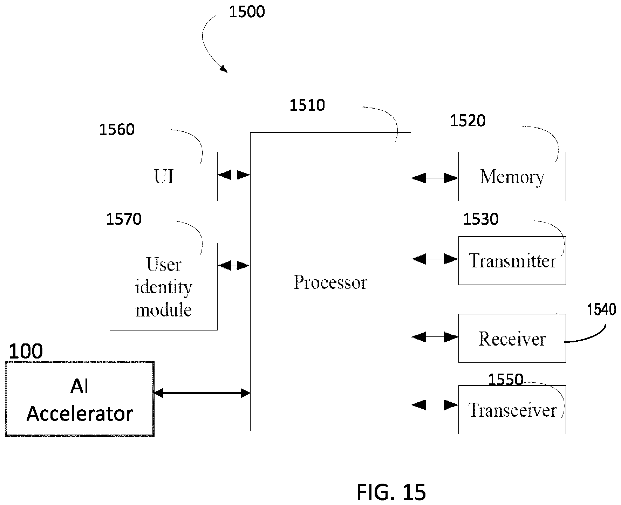

FIG. 15 shows, by way of example, a block diagram of an apparatus capable of performing the method(s) as disclosed herein. Illustrated is a device 1500. In an example the device comprises an AI accelerator 100 as disclosed in relation to FIG.1A. The AI accelerator 100 is communicatively coupled to a processor 1510.

Comprised in device 1500 is the processor 1510, which may comprise, for example, a single- or multi-core processor wherein a single-core processor comprises one processing core and a multi-core processor comprises more than one processing core. Processor 1510 may comprise, in general, a control device. Processor 1510 may comprise more than one processor. Processor 1510 may be a control device. A processing core may comprise, for example, a Cortex-A8 processing core manufactured by ARM™ Holdings or a Steamroller processing core designed by Advanced Micro Devices Corporation™. Processor 1510 may comprise at least one Qualcomm™ Snapdragon and/or Intel™ Atom processor. Processor 1510 may comprise at least one application-specific integrated circuit, ASIC. Processor 1510 may comprise at least one field-programmable gate array, FPGA. Processor 1510 may be means for performing method steps in device 1500. Processor 1510 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analogue and/or digital hardware circuit(s) with software/firmware and (ii) any portions of hardware processor(s) with software (including digital signal processor(s)), software, and memory(ies) that work together to cause an apparatus, such as a mobile phone or a network node, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 1500 may comprise memory 1520. Memory 1520 may comprise random-access memory and/or permanent memory. Memory 1520 may comprise at least one RAM chip. Memory 1520 may comprise solid-state, magnetic, optical and/or holographic memory, for example. Memory 1520 may be at least in part accessible to processor 1510. Memory 1520 may be at least in part comprised in processor 1510. Memory 1520 may be means for storing information. Memory 1520 may comprise computer instructions that processor 1510 is configured to execute. When computer instructions configured to cause processor 1510 to perform certain actions are stored in memory 1520, and device 1500 overall is configured to run under the direction of processor 1510 using computer instructions from memory 1520, processor 1510 and/or its at least one processing core may be considered to be configured to perform said certain actions. Memory 1520 may be at least in part external to device 1500 but accessible to device 1500.

Device 1500 may comprise a transmitter 1530. Device 1500 may comprise a receiver 1540. Transmitter 1530 and receiver 1540 may be configured to transmit and receive, respectively, information in accordance with at least one cellular or non-cellular standard. Transmitter 1530 may comprise more than one transmitter. Receiver 1540 may comprise more than one receiver. Transmitter 1530 and/or receiver 1540 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 1500 may comprise a near-field communication, NFC, transceiver 1550. NFC transceiver 1550 may support at least one NFC technology, such as NFC, Bluetooth™, Wibree or similar technologies.

Device 1500 may comprise user interface, UI, 1560. UI 1560 may comprise at least one of a display, a keyboard, a touchscreen, a vibrator arranged to signal to a user by causing device 1500 to vibrate, a speaker and a microphone. A user may be able to operate device 1500 via UI 1560, for example to accept incoming telephone calls, to originate telephone calls or video calls, to browse the Internet, to manage digital files stored in memory 1520 or on a cloud accessible via transmitter 1530 and receiver 1540, or via NFC transceiver 1550, and/or to play games.

Device 1500 may comprise or be arranged to accept a user identity module 1570. User identity module 1570 may comprise, for example, a subscriber identity module, SIM, card installable in device 1500. A user identity module 1570 may comprise information identifying a subscription of a user of device 1500. A user identity module 1570 may comprise cryptographic information usable to verify the identity of a user of device 1500 and/or to facilitate encryption of communicated information and billing of the user of device 1500 for communication effected via device 1500.

Processor 1510 may be furnished with a transmitter arranged to output information from processor 1510, via electrical leads internal to device 1500, to other devices comprised in device 1500. Such a transmitter may comprise a serial bus transmitter arranged to, for example, output information via at least one electrical lead to memory 1520 for storage therein. Alternatively to a serial bus, the transmitter may comprise a parallel bus transmitter. Likewise processor 1510 may comprise a receiver arranged to receive information in processor 1510, via electrical leads internal to device 1500, from other devices comprised in device 1500. Such a receiver may comprise a serial bus receiver arranged to, for example, receive information via at least one electrical lead from receiver 1540 for processing in processor 1510. Alternatively to a serial bus, the receiver may comprise a parallel bus receiver.

Processor 1510, memory 1520, transmitter 1530, receiver 1540, NFC transceiver 1550, UI 1560 and/or user identity module 1570 may be interconnected by electrical leads internal to device 1500 in a multitude of different ways. For example, each of the aforementioned devices may be separately connected to a master bus internal to device 1500, to allow for the devices to exchange information. However, as the skilled person will appreciate, this is only one example and depending on the embodiment various ways of interconnecting at least two of the aforementioned devices may be selected.

In an example the AI accelerator 100 is configured to perform the method of Fig. 6. In another example, the processor 1510 of the device 1500 is configured to perform at least part of the method of Fig. 6. In an example, the processor 1510 of the device 1500 is configured to perform the method of Fig. 6, wherein executing the first machine learning model and the second machine learning model according to the determined execution schedule comprises causing the AI accelerator 100 to execute the first machine learning model and the second machine learning model according to the determined execution schedule.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

As used herein, "at least one of the following: <a list of two or more elements>" and "at least one of: <a list of two or more elements>" and similar wording, where the list of two or more elements are joined by "and" or "or", mean at least any one of the elements, or at least any two or more of the elements, or at least all the elements.

The term "non-transitory" as used herein, is a limitation of the medium itself (i.e. tangible, not a signal) as opposed to a limitation on data storage persistency (e.g., RAM vs. ROM).

It is to be understood that what is described above is what is presently considered the preferred embodiments. However, it should be noted that the description of the preferred embodiments is given by way of example only and that various modifications may be made without departing from the scope as defined by the appended claims.

## Claims

1. Apparatus, comprising:

   means for obtaining a first machine learning model, the first machine learning model comprising at least a first layer;
   means for obtaining a second machine learning model, the second machine learning model comprising at least a second layer;
   means for determining an execution schedule for executing the first machine learning model and the second machine learning model, wherein the means for determining the execution schedule are configured to:
   vary a number of processing resources and a start time allocated to the first layer and the second layer; and
   means for executing the first machine learning model and the second machine learning model according to the execution schedule.

2. The apparatus according to claim 1, wherein the execution schedule comprises:

   a first start time defining when execution of the first layer begins;
   a second start time defining when execution of the second layer begins; and
   a resource allocation for the first layer and the second layer comprising at least one of: a first processing resource or a second processing resource.

3. The apparatus according to claim 2, wherein executing the first machine learning model and the second machine learning model according to the execution schedule comprises:

   executing the first layer of the first machine learning model at the first start time on the first processing resource and the second processing resource; and
   executing the second layer of the second machine learning model at a second start time on the first processing resource.

4. The apparatus according to any preceding claim, wherein the means for determining the execution schedule comprises means for:

   generating a first possible execution schedule for executing the first machine learning model and the second machine learning model;
   generating a second possible execution schedule for executing the first machine learning model and the second machine learning model; wherein the first possible execution schedule is different to the second possible execution schedule; and
   selecting the first possible execution schedule or the second possible execution schedule as the execution schedule.

**5.** The apparatus according to claim 4, wherein the means for selecting the first possible execution schedule or the second possible execution schedule as the execution schedule comprise:

means for determining a latency of the first possible execution schedule;
means for determining a latency of the second possible execution schedule; and
means for selecting the first possible execution schedule as the execution schedule in response to determining that the first possible execution schedule satisfies a criteria.

**6.** The apparatus according to claim 5, wherein the criteria is based on at least one of:

minimising a total execution time of the first machine learning model and second machine learning model; or
maximising a total inference throughput of the first machine learning model and second machine learning model.

**7.** The apparatus according to any of claims 1-3, wherein the means for determining an execution schedule for executing the first machine learning model and the second machine learning model is configured to:

allocate at least one processing resource at a first time to execute the first layer of the first machine learning model;
determine if the second layer of the second machine learning model can be executed in parallel on at least one unallocated processing resource; and
allocate the at least one unallocated processing resource at the first time to execute the second layer in response to determining that the second layer can be executed in parallel.

**8.** The apparatus according to claim 7, wherein the means for determining an execution schedule are further configured to:
allocate the at least one processing resource processing resource to execute the second layer at a second time in response to determining that the second layer of the cannot be executed in parallel, wherein:
the second time corresponds to a time when the first layer has completed execution on the at least one processing resource.

**9.** The apparatus according to any preceding claim, wherein the means for determining an execution schedule for executing the first machine learning model and the second machine learning model comprises means for:
determining a latency to execute the first layer of the machine learning model on a first set of processing resources.

**10.** The apparatus according to claim 9, wherein the first layer of the first machine learning model is associated with a type of operation performed by the first layer; and wherein the means for determining the latency to execute the first layer of the machine learning model on the first set of processing resources are configured to:

determine a number of operations performed by the first layer on an input channel; and
calculate the latency to execute the first layer based on:

the number of operations performed by the first layer on the input channel; and
a latency associated with the type of operation performed by the first layer.

**11.** The apparatus according to claim 10, where the type of operation performed by the first layer comprises a first convolutional operation using a first filter.

**12.** The apparatus according to claim 11, wherein the first layer of the first machine learning model is associated with a number of input channels to the first layer; and wherein the means for determining the latency are further configured to calculated the latency to execute the first layer based on:

the number of input channels;
a number of times different input channels are executed on a single processing resource in the first set of processing resources.

**13.** The apparatus according to claim 12, wherein the means for determining the latency to execute the first layer of the machine learning model on a first set of processing resources further are further configured to:
determine the number of times different input channels are executed on the single processing resource based on: the number of input channels divided by a number of processing resources in the first set of processing resources.

14. The apparatus according to any preceding claim, wherein the first processing resource comprises at least one convolutional processing unit.

15. A method comprising:

obtaining a first machine learning model, the first machine learning model comprising at least a first layer;
obtaining a second machine learning model, the second machine learning model comprising at least a second layer;
determining an execution schedule for executing the first machine learning model and the second machine learning model, wherein determining the execution schedule comprises:
varying a number of processing resources and a start time allocated to the first layer and the second layer; and
executing the first machine learning model and the second machine learning model according to the execution schedule.

FIG. 1A

100

105

107

106

104

101

102

103

FIG. 1B

EP 4 557 096 A1

FIG. 2

300

n = 1280

n = 32

n = 96

n = 1280

128x128x3    128x128    64 x 64    32 x 32    4 x 4

Flattened

$c_1$
$c_2$
$c_n$

Softmax

Fully Connected

MobileNetV2

Classifier

302

Preprocessing    3x3 Conv, ReLU    Max pool 2x2

FIG. 3

(The width indicates the number of allocated processors)

M1

M2

M1

M2

Execution time

3367 us

4393 us
4515 us

Sequential
Inference

402

Static Allocation

404

FIG. 4

First machine learning model – M1

Layers:
Layer M1-1
Layer M1-2

.
.
.

Layer N

Second machine learning model – M2

Layers:
Layer M2-1
Layer M2-2

.
.
.

Layer R

FIG. 5

**600**

| |
|---|
| **601** OBTAINING A FIRST MACHINE LEARNING MODEL, THE FIRST MACHINE LEARNING MODEL COMPRISING AT LEAST A FIRST LAYER |

| |
|---|
| **602** OBTAINING A SECOND MACHINE LEARNING MODEL, THE SECOND MACHINE LEARNING MODEL COMPRISING AT LEAST A SECOND LAYER |

| |
|---|
| **603** DETERMINING AN EXECUTION SCHEDULE FOR EXECUTING THE FIRST MACHINE LEARNING MODEL AND THE SECOND MACHINE LEARNING MODEL BY VARYING A NUMBER OF PROCESSING RESOURCES AND A START TIME ALLOCATED TO THE FIRST LAYER AND THE SECOND LAYER |

| |
|---|
| **604** EXECUTING THE FIRST MACHINE LEARNING MODEL AND THE SECOND MACHINE LEARNING MODEL ACCORDING TO THE EXECUTION SCHEDULE |

FIG. 6

(The width indicates the number of allocated processors)

Execution time

M1 | M2 | M1 Layer 1 | M2 Layer 1 | M2 Layer 2 | M2 Layer 3 | M1 Layer 2 | M1 Layers 3~ | M2 Layers 4~

3367us

4393 us
4515 us

Sequential Inference 402 | Static Allocation 404 | Dynamic Allocation 700

FIG. 7

EP 4 557 096 A1

800

| 65 | 1 | 8 | 2 |
| 98 | 4 | 2 | 43 | 2 |
| 9 | 7 | 12 | 0 | 3 | 85 |
| 1 | 96 | 2 | 35 | 7 | 8 |
| | 18 | 8 | 2 | 9 | 22 |
| | | 1 | 5 | 5 | 22 |

Channels

Height

Width

FIG. 8

FIG. 9A

FIG. 9B

EP 4 557 096 A1

900

Time

Num parallels

| Input Channel 65 | ... | | | | | | | | | | |
| Input Channel 1 | ... | | | | | | | | | | Input Channel 64 |
| | | | | | | | | | | | |
| Convolutional Processing Unit 1 | ... | | | | | | | | | | Convolutional Processing Unit 64 |

Convolutional Processing Units

FIG. 9C

FIG. 9D

FIG. 9E

EP 4 557 096 A1

Global variables: current <u>execution time</u>

$L^1_4$ | $L^1_5$ | $L^1_6$ | $L^1_7$ | $L^1_8$ | $L^1_9$ ← M1

$L^2_2$ | $L^2_3$ | $L^2_4$ ← M2

F

1002

e.g. Running = $L^1_3$    Yes → **Is a layer currently running in the schedule?**    No

1004 → **Determine available processing resources**

1010 → **Select next layer to execute based on next layer with more channels (e.g. $L^1_4$ or $L^2_2$)**

1006 → **Set candidate layer to layer of model not being executed (e.g. $L^2_2$)**

1012 → **Remove selected layer from stack**

1008

Yes ← **Is number of input channels for candidate layer < available processors** → No

$L^1_5$ | $L^1_6$ | $L^1_7$ | $L^1_8$ | $L^1_9$

$L^2_2$ | $L^2_3$ | $L^2_4$

**Set running to selected layer** ← 1014

A

B

**Add selected layer to schedule** ← 1016

E

FIG. 10

EP 4 557 096 A1

**FIG. 11B**

1108 — Set execution time (i.e. next time schedule is re-evaluated) to execution time + running layer execution time

1110 — Set running layer to NONE (i.e. next time schedule is re-evaluated no layers will be running)

B

Continue executing only running layer

E

**FIG. 11A**

1102 — Set candidate layer to next layer to process (e.g. next layer to process = $L^2_2$)

1104 — Remove candidate layer from stack

1106 — Is execution time of running layer (e.g. $L^1_3$) > execution time of candidate layer (e.g. $L^2_2$)

A

$L^1_4$ $L^1_5$ $L^1_6$ $L^1_7$ $L^1_8$ $L^1_9$

$L^2_3$ $L^2_4$

Yes → C

No → D

Calculate time of next schedule re-evaluation & remaining times

**C**

Add next layer to process (e.g. $L^2_2$) to the schedule — 1202

Set running layer execution time to running layer execution time – candidate layer execution time — 1204

Set execution time (i.e. next time schedule is re-evaluated) to execution time + candidate layer execution time — 1206

**E**

**D**

Add next layer to process (e.g. $L^2_2$) to the schedule — 1208

Set candidate layer execution time to candidate layer execution time – running layer execution time — 1210

Set execution time (i.e. next time schedule is re-evaluated) to execution time + running layer execution time — 1212

Set running layer to candidate layer — 1214

**E**

FIG. 12

40

FIG. 13

EP 4 557 096 A1

(The width indicates the number of allocated processors)

Execution time

M1

M2

M1

M2

M1 Layer 1

M1
Layers 2 ~

M2
Layers 1 ~

3476
3485

4738

5994
6147

Sequential
Inference

Static Allocation

Dynamic Allocation

402

404

1400

FIG. 14

FIG. 15

EP 4 557 096 A1

Europäisches
Patentamt

European
Patent Office

Office européen
des brevets

# EUROPEAN SEARCH REPORT

Application Number

EP 24 20 9338

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OH YOUNG H ET AL: "Layerweaver: Maximizing Resource Utilization of Neural Processing Units via Layer-Wise Scheduling", 2021 IEEE INTERNATIONAL SYMPOSIUM ON HIGH-PERFORMANCE COMPUTER ARCHITECTURE (HPCA), IEEE, 27 February 2021 (2021-02-27), pages 584-597, XP033905609, DOI: 10.1109/HPCA51647.2021.00056 [retrieved on 2021-04-16] * abstract * * Section "III, Layerweaver" * | 1-15 | INV. G06F9/48 G06N3/045 G06N3/0464 |
| A | EP 3 968 238 A1 (SAMSUNG ELECTRONICS CO LTD [KR]) 16 March 2022 (2022-03-16) * abstract * * paragraph [0004] - paragraph [0016] * * paragraph [0060] - paragraph [0076] * | 1-15 | |
| A | US 2023/004855 A1 (MODY MIHIR NARENDRA [IN] ET AL) 5 January 2023 (2023-01-05) * abstract * * paragraph [0003] * * paragraph [0027] - paragraph [0030] * * paragraph [0035] - paragraph [0036] * | 1-15 | TECHNICAL FIELDS SEARCHED (IPC) G06F G06N |
| A | KANG WOOSUNG ET AL: "LaLaRAND: Flexible Layer-by-Layer CPU/GPU Scheduling for Real-Time DNN Tasks", 2021 IEEE REAL-TIME SYSTEMS SYMPOSIUM (RTSS), IEEE, 7 December 2021 (2021-12-07), pages 329-341, XP034125035, ISSN: 2576-3172, DOI: 10.1109/RTSS52674.2021.00038 ISBN: 978-1-6654-2802-6 [retrieved on 2021-12-07] * abstract * | 1-15 | |

The present search report has been drawn up for all claims

| Place of search | Date of completion of the search | Examiner |
|---|---|---|
| The Hague | 4 March 2025 | Archontopoulos, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 20 9338

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2025

| Patent document cited in search report | | Publication date | Patent family member(s) | | Publication date |
|---|---|---|---|---|---|
| EP 3968238 | A1 | 16-03-2022 | CN | 114239794 A | 25-03-2022 |
| | | | EP | 3968238 A1 | 16-03-2022 |
| | | | KR | 20220033314 A | 16-03-2022 |
| | | | US | 2022075645 A1 | 10-03-2022 |
| US 2023004855 | A1 | 05-01-2023 | NONE | | |

For more details about this annex : see Official Journal of the European Patent Office, No. 12/82

EPO FORM P0459